# EUROPEAN PATENT APPLICATION

(11) **EP 4 800 439 A1**
(43) Date of publication of application: **02.09.2026**
(21) Application number: 26161045.5
(22) Date of filing: 26.02.2026
(51) Int. Cl.: G01V 1/38

(54) **CURVED MARINE SPARKER SOURCE ARRAYS**

(30) Priority: 28.02.2025 US 202563764933 P; 23.02.2026 US 202619547411
(71) Applicant: PGS Geophysical AS, 0216 Oslo (NO)
(72) Inventor: FERNIHOUGH, Robert Alexis Peregrin, Houston, TX77041 (US)
(74) Representative: Zacco Norway AS

(57) **Abstract**

A marine seismic source includes plural impulsive source elements arranged in a three-dimensional pattern having a width in an x direction, a length in a y direction, and a depth in a z direction, wherein the x, y, and z directions are mutually orthogonal. The source elements may be configured to be towed in a body of water such that the x direction corresponds to a crossline direction, the y direction corresponds to an inline direction, and the z direction corresponds to a vertical direction. The pattern of source elements has at least one vertical cross sectional profile that defines a curve, which widens the range of angles over which the source emits acoustic energy at higher frequencies. In some embodiments, the source elements may include marine sparker source elements.

## Description

### Cross-Reference to Related Applications

This application claims benefit to the filing date of US Provisional Application 63/764,933, filed February 28, 2025 and US Non-Provisional Application 19/547,411, filed February 23, 2026, the contents of which are hereby incorporated by reference as if entirely set forth herein. In the event of a conflict between the meaning of terms used in the aforementioned applications and the same or similar terms as used herein, the meanings associated with this application shall control.

### Background

Marine seismic surveys are performed in bodies of water to gain information about geological features that are disposed in the subsurface beneath the water bottom. Such surveys are performed for a variety of purposes. Some, for example, seek to identify locations of hydrocarbon reservoirs or to determine changes in properties of such reservoirs. These types of surveys are sometimes referred to as "prospecting surveys." Other surveys seek to assess the suitability of a site for the installation of structures such as wind turbines, pipelines, or cables, or to locate or inspect existing installations of such structures. The latter types of surveys are sometimes referred to as "site surveys." Both prospecting surveys and site surveys typically employ one or more seismic sources that are controlled by a seismic source controller located onboard a survey vessel. Such sources may include one or more impulsive sources (e.g., air guns), one or more non-impulsive sources (e.g., marine vibrators), or a combination of impulsive and non-impulsive sources.

For site surveys, it is known to use an impulsive source type known as a "sparker," the details of which will be more fully described below. The pressure impulse emitted by a single sparker source element has significantly lower amplitude than the pressure impulse emitted by an air gun. For this reason, it has become common to arrange multiple sparker source elements into a planar grid pattern and to activate all of the sparker elements in the grid simultaneously. Doing so produces a combined pressure impulse having a larger amplitude than that of a single sparker element activated alone.

While known planar grids of sparker source elements produce sufficient energy to penetrate the subsurface to a depth that is adequate for the purposes of most site surveys, the energy produced by a planar grid of sparker elements is highly directionally at frequencies above approximately 1 kHz. Consequently, the seismic reflections associated with a planar sparker grid source activation tend to be nearly vertical. That is, the reflections tend to come from a direction that is normal to the plane of the sparker grid. This phenomenon causes substantially all of the higher frequency reflected energy to be recorded by sensors that are disposed at offsets close to the location of the source activation, with little to no higher frequency energy being recorded by sensors disposed at larger offsets from the source activation. This lack of higher frequency reflected energy at larger offsets, in turn, limits the quality of the images that can be generated from the seismic data that are recorded during the survey.

A need therefore exists for techniques to increase the higher frequency signal energy recorded at larger offsets in marine seismic surveys relative to the signal energy recorded in surveys that employ known sparker source arrays.

### Brief Description of the Drawings

FIGS. 1 and 2 are top and side views, respectively, illustrating an example towed streamer marine seismic survey in accordance with embodiments.
FIG. 3 is a side view illustrating an example ocean bottom cable marine seismic survey in accordance with embodiments.
FIG. 4 is a side view illustrating an example ocean bottom node marine seismic survey in accordance with embodiments.
FIGS. 5-7 are block diagrams schematically illustrating example groupings of seismic sensors suitable for use in any of the surveys of FIGS. 1-4.
FIG. 8 is a diagram illustrating several types of offsets in marine seismic surveys.
FIG. 9 is a block diagram illustrating an example computing device that may be used to implement methods and apparatus in accordance with embodiments.
FIG. 10 is an oblique view illustrating an example planar array of sparker source elements.
FIGS. 11 and 12 are front and side views, respectively, illustrating the planar array of FIG. 10 configured to be towed in a body of water during a marine seismic survey.
FIG. 13 is a side view of a marine seismic survey illustrating directionality exhibited by the planar array of FIGS. 10-12 at lower frequencies.
FIG. 14 is a side view of a marine seismic survey illustrating directionality exhibited by the planar array of FIGS. 10-12 at higher frequencies.
FIG. 15 is an oblique view illustrating an example curved array of sparker source elements oriented in a concave upward configuration in accordance with embodiments.
FIG. 16 is a front orthogonal view of the curved array of FIG. 15.
FIG. 17 is a bottom orthogonal view of the curved array of FIG. 15.
FIG. 18 is a schematic view illustrating an example frame structure to which source elements may be attached in accordance with embodiments.
FIG. 19 is an inline sectional view of the curved array of FIG. 15 taken along section 19-19 as indicated in FIG. 17.
FIG. 20 is a crossline sectional view of the curved array of FIG. 15 taken along section 20-20 as indicated in FIG. 17.
FIG. 21 is an oblique view illustrating an example curved array of sparker source elements oriented in a concave downward configuration in accordance with embodiments.
FIG. 22 is a schematic view illustrating identical upward and downward far field radiation patterns exhibited by a circularly curved array of impulsive source elements in accordance with embodiments.
FIG. 23 is a schematic view illustrating a linear or planar array of marine sparker source elements.
FIG. 24 is a schematic view illustrating an example curved array of marine sparker source elements in accordance with embodiments.
FIGS. 25A and 25B are polar and cartesian plots, respectively, illustrating the directionality exhibited by the arrays of FIGS. 23 and 24 at 500 Hz.
FIGS. 26A and 26B are polar and cartesian plots, respectively, illustrating the directionality exhibited by the arrays of FIGS. 23 and 24 at 1 kHz.
FIGS. 27A and 27B are polar and cartesian plots, respectively, illustrating the directionality exhibited by the arrays of FIGS. 23 and 24 at 2 kHz.
FIGS. 28A and 28B are polar and cartesian plots, respectively, illustrating the directionality exhibited by the arrays of FIGS. 23 and 24 at 4 kHz.
FIG. 29 is an oblique view of an example curved array of sparker source elements mounted to a hemispherical frame in accordance with embodiments.
FIG. 30 is a side view illustrating the curved array of FIG. 29 configured to be towed in a body of water in accordance with embodiments.

### Detailed Description

This disclosure describes multiple embodiments by way of example and illustration. It is intended that characteristics and features of all described embodiments may be combined in any manner consistent with the teachings, suggestions and objectives contained herein. For example, elements of a first described embodiment may be substituted for or combined with elements of any one or more other described embodiment to yield additional embodiments. Thus, phrases such as "in an embodiment," "in one embodiment," and the like, when used to describe embodiments in a particular context, are not intended to limit the described characteristics or features only to the embodiments appearing in that context.

The phrases "based on" or "based at least in part on" refer to one or more inputs that can be used directly or indirectly in making some determination or in performing some computation. Use of those phrases herein is not intended to foreclose using additional or other inputs in making the described determination or in performing the described computation. Rather, determinations or computations so described may be based either solely on the referenced inputs or on those inputs as well as others.

The phrase "configured to" as used herein means that the referenced item, when operated, can perform the described function. In this sense an item can be "configured to" perform a function even when the item is not operating and is therefore not currently performing the function. Use of the phrase "configured to" herein does not necessarily mean that the described item has been modified in some way relative to a previous state.

"Coupled" as used herein refers to a connection between items. Such a connection can be direct or can be indirect through connections with other intermediate items.

Terms used herein such as "including," "comprising," and their variants, mean "including but not limited to."

Articles of speech such as "a," "an," and "the" as used herein are intended to serve as singular as well as plural references except where the context clearly indicates otherwise. For example, articles of speech such as "a," "an," and "the," when used in a claim or sentence subsequent to words such as "including," "comprising," or their variants, mean "one or more."

Terms used herein such as "substantially," "about," "approximately," and their variants, mean within plus or minus ten percent of the associated reference quantity, item, or characteristic.

"Curved" and its variants as used herein refer to a pattern that is not entirely linear, but may include one or more straight line segments as, for example, in a discretized curve consisting of a series of points arranged in a manner such that not all of the points lie on a single line. Such a discretized curve is considered to be "curved" for purposes of this disclosure.

"Inline direction" and its variants as used herein refers to a direction parallel to the line of tow during a marine seismic survey. By convention, the positive inline direction is opposite to the direction in which the tow vessel travels.

"Crossline direction" and its variants as used herein refers to a direction orthogonal to the inline direction and in a plane parallel to that of the sea surface.

"Depth direction" refers to a direction vertically downward from the plane of the sea surface toward the water bottom.

An "inline cross sectional profile" as used herein refers to a section that lies in a plane parallel to the inline direction and parallel to the depth direction.

A "crossline cross sectional profile" as used herein refers to a section that lies in a plane parallel to the crossline direction and parallel to the depth direction.

"Directionality" as used herein refers to the far field spatial response of a source array. Stated otherwise, directionality refers to the radiation pattern of a source array as measured at distances from the source array that are large relative to the size of the source array itself.

"Convex" as used herein means having a shape that is curved or rounded outward like the exterior of a sphere or circle, but may include shapes that are not necessarily spherical or circular. For a convex pattern of discrete points (such as, for example, the tips of sparker source elements arranged in such a pattern), a line joining any two of the points will lie entirely on or apart from the part of the pattern that the line transects.

"Concave" as used herein refers to a shape that is curved such that the curve itself lies on or above its tangent lines or lies on or below its tangent lines, but not both above and below its tangent lines. For a concave pattern of discrete points, the pattern is concave upward if the pattern itself lies on or above its tangent lines, whereas the pattern is concave downward if the pattern itself lies on or below its tangent lines.

"Compound" as used herein refers to a shape in which at least two portions define different curves. By way of non-limiting example, a pattern of discrete points is considered to have a compound shape for purposes of this disclosure if a first part of the pattern has a first radius of curvature and a second part of the pattern has a second radius of curvature different than the first radius of curvature. By way of further non-limiting example, a pattern of discrete points is considered to have a compound shape for purposes of this disclosure if different portions along the curve correspond to different focal points. Other examples of compound shapes are also possible.

"Polyhedron" as used herein refers to a shape that consists of a collection of polygons joined at their edges.

"Vertical cross sectional profile" as used herein refers to the profile of a shape as viewed in a cross section that lies in a vertical plane.

### Marine Seismic Surveys Generally

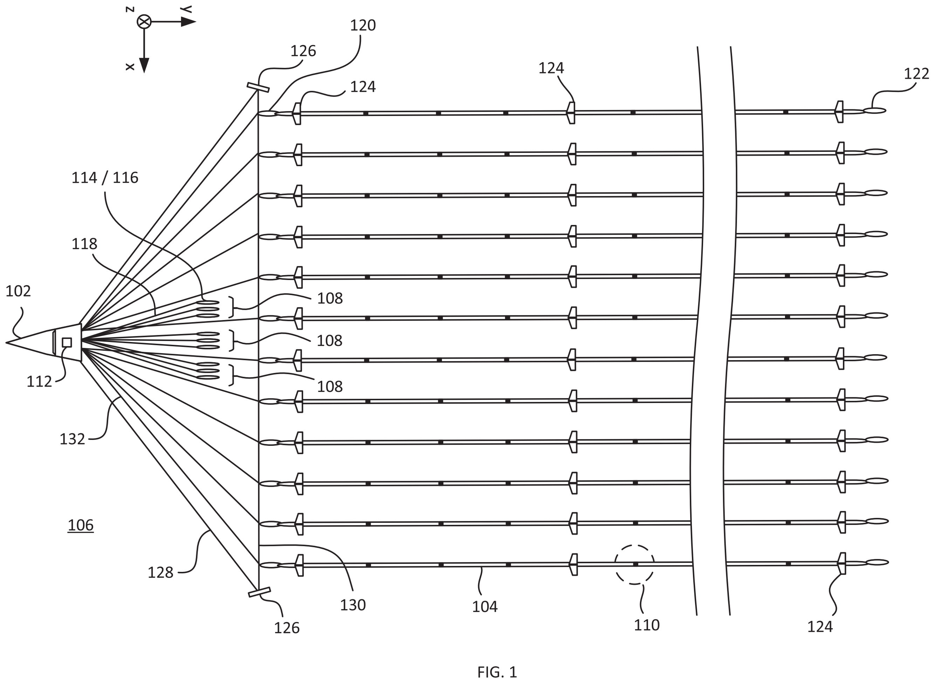

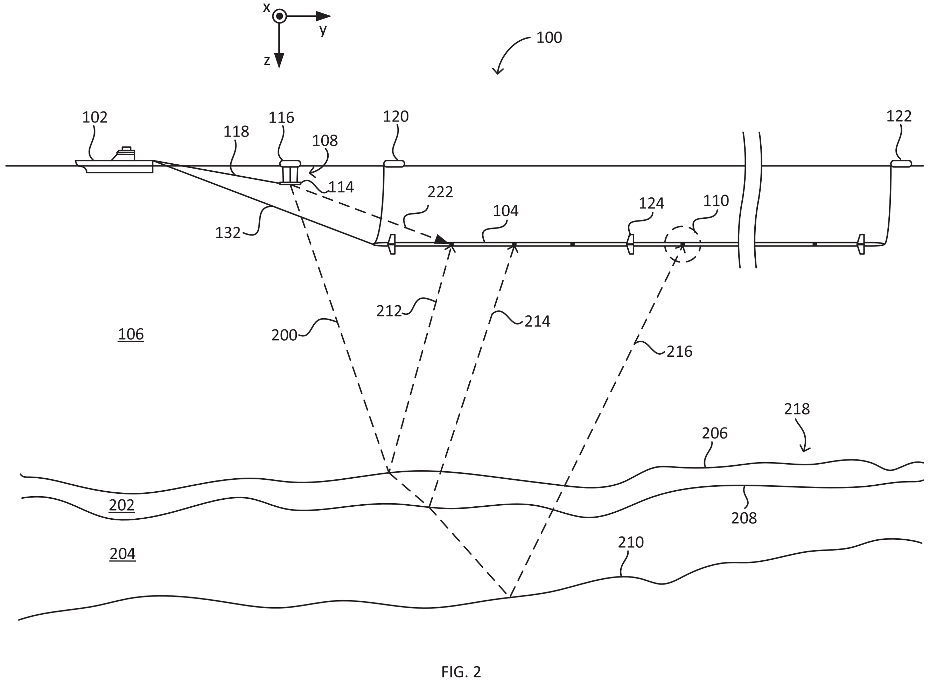

FIGS. 1 and 2 present top and side views, respectively, of an example towed streamer marine seismic survey system that employs impulsive seismic sources. Survey system 100 is representative of a variety of similar geophysical survey systems in which a vessel 102 tows an array of elongate sensor streamers 104 in a body of water 106 such as an ocean, a sea, a bay, or a large lake. Typically the vessel is equipped with at least one global positioning system ("GPS") unit so that its location during the survey may be known and recorded for later use. Vessel 102 is shown towing twelve streamers 104 in the illustrated example. In other embodiments, any number of streamers may be towed, from as few as one streamer to as many as twenty or more. The terms "streamer" and "cable" as used herein should be interpreted to include any type of seismic sensor cable, and the two terms may be used interchangeably below.

During a typical marine seismic survey, one or more seismic sources 108 are activated to produce acoustic energy 200 that propagates in body of water 106. Energy 200 penetrates various layers of sediment and rock 202, 204 underlying body of water 106. As it does so, it encounters interfaces 206, 208, 210 between materials having different physical characteristics, including different acoustic impedances. At each such interface, a portion of energy 200 is reflected upward while another portion of the energy is refracted downward and continues toward the next lower interface, as shown. Reflected energy 212, 214, 216 is detected by sensors 110 disposed at intervals along the lengths of streamers 104, along with a so-called direct wavefield that reaches the sensors via a path, such as path 222, that travels directly from the impulsive sources 108 to the location of the sensors. In FIGS. 1 and 2, sensors 110 are indicated as black squares inside each of streamers 104. Sensors 110 produce signals corresponding to the reflected energy. These signals are collected and recorded by control equipment 112 located onboard vessel 102. The recorded signals may be processed and analyzed onboard vessel 102 and/or at one or more onshore data centers to produce images of structures within subsurface 218. These images can be useful, for example, in identifying possible locations of hydrocarbon reservoirs within subsurface 218 or in identifying favorable locations within subsurface 218 for the installation of new structures such as foundations for wind turbines.

Any number of sources 108 may be used in a marine seismic survey in accordance with embodiments. In the illustrated example, vessel 102 is shown towing three such sources. In other systems, different numbers of sources may be used, and the sources may be towed by other vessels, which vessels may or may not tow additional streamer arrays. Typically, an impulsive source 108 includes one or more source subarrays 114, and each subarray 114 includes one or more acoustic emitters such as air guns. Depending on the survey type, other types of sources may also be present, such as sparkers, boomers, or marine vibrators. In either case, each subarray 114 may be suspended at a desired depth from a subarray float 116. Compressed air as well as electrical power and control signals may be communicated to each subarray via source umbilical cables 118. Data may be collected, also via source umbilical cables 118, from various sensors located on subarrays 114 and/or floats 116, such as acoustic transceivers and GPS units. Acoustic transceivers and GPS units so disposed help to accurately determine the positions of each subarray 114 during a survey. In some cases, subarrays 114 may be equipped with steering devices to better control their positions during the survey.

In the context of surveys related to the prospection of hydrocarbon reservoirs, streamers 104 are often very long -- on the order of 5 to 10 kilometers or longer -- so usually are constructed by coupling numerous shorter streamer sections together. For site surveys such as those related to the installation of wind turbines, the streamers are typically much shorter - on the order of 100 to 500 meters, depending on the water depth.

In either case, each streamer 104 may be attached to a dilt float 120 at its proximal end (the end nearest vessel 102) and to a tail buoy 122 at its distal end (the end farthest from vessel 102). Dilt floats 120 and tail buoys 122 may be equipped with GPS units as well, to help determine the positions of each streamer 104 relative to an absolute frame of reference such as the earth. Each streamer 104 may in turn be equipped with acoustic transceivers and/or compass units to help determine their positions between GPS units and/or relative to one another. In many survey systems 100, streamers 104 include steering devices 124 attached at intervals, such as every 300 meters. Steering devices 124 typically provide one or more control surfaces to enable moving the streamer to a desired depth, or to a desired lateral position, or both. Paravanes 126 are shown coupled to vessel 102 via tow ropes 128. As the vessel tows the equipment, paravanes 126 provide opposing lateral forces that straighten a spreader rope 130, to which each of streamers 104 is attached at its proximal end. Spreader rope 130 helps to establish a desired crossline spacing between the proximal ends of the streamers. Power, control, and data communication pathways are housed within lead-in cables 132, which couple the sensors and control devices in each of streamers 104 to the control equipment 112 onboard vessel 102.

Collectively, the array of streamers 104 forms a sensor surface at which acoustic energy is received for recording by control equipment 112. In many instances, it is desirable for the streamers to be maintained in a straight and parallel configuration to provide a sensor surface that is generally flat, horizontal, and uniform. In other instances, an inclined and/or fan shaped receiving surface may be desired and may be implemented using control devices on the streamers such as those just described. Other array geometries may be implemented as well. Prevailing conditions in body of water 106 may cause the depths and lateral positions of streamers 104 to vary at times. In various embodiments, streamers 104 need not all have the same length and need not all be towed at the same depth or with the same depth profile.

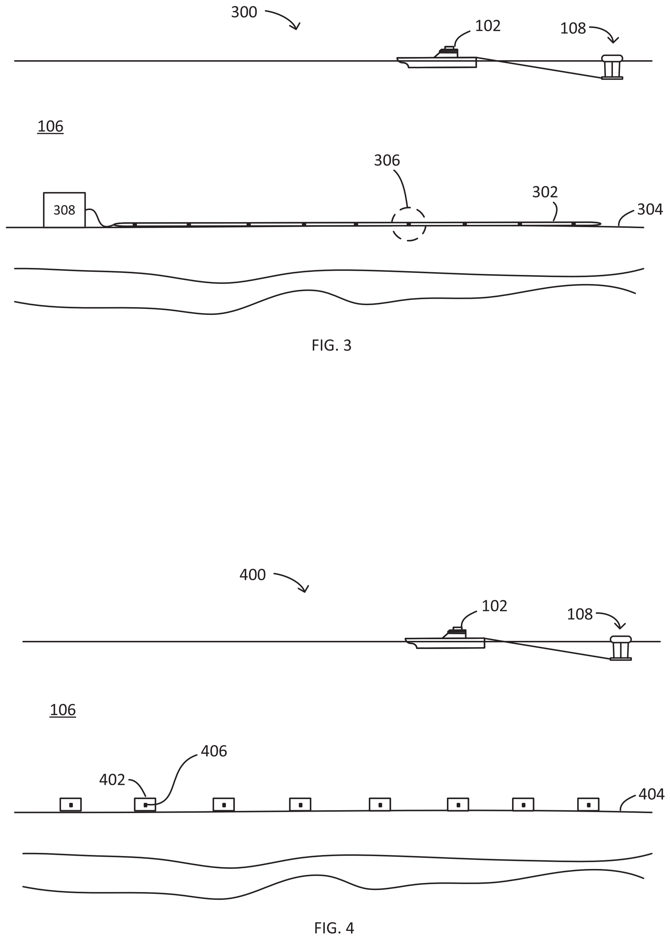

FIG. 3 illustrates an example ocean bottom cable survey system 300, in which a vessel 102 tows one or more sources 108 over an installation of one or more ocean bottom cables 302, each of which is disposed on a water bottom 304. Each cable 302 may include one or more sensors or sensor groups 306 disposed along its length, generally as shown. In turn, each of the cables may be coupled to a manifold 308 in which signals from the sensors may be aggregated and either stored or transmitted to a collection point, or both. In some surveys, the cables may be suspended within the water column.

FIG. 4 illustrates an example ocean bottom node survey system 400, in which a vessel 102 tows one or more sources 108 over an installation of one or more ocean bottom nodes 402, each of which is disposed on a water bottom 404. Each node 402 may include one or more sensors or sensor groups 406 as shown. Signals generated by the sensors or sensor groups may be collected in the nodes for later retrieval, or may be transmitted to a collection point, or both. In some surveys, the nodes may float on or below the water surface.

Techniques to be described herein may be employed in the context of any of the above or similar types of marine seismic surveys, as well as in other types of marine seismic surveys.

### Geophysical Sensors in Marine Seismic Surveys

Each of sensors 110, 306, 406 may include one or more different sensor types such as pressure sensors (e.g., hydrophones) and/or motion sensors. Examples of motion sensors include velocity sensors (e.g., geophones) and acceleration sensors (e.g., accelerometers) such as micro-electromechanical system ("MEMS") devices. In general, pressure sensors provide a magnitude-only, or scalar, measurement. This is because pressure in seismic applications is generally not associated with a direction and is therefore regarded as a scalar quantity. Motion sensors such as velocity sensors and acceleration sensors, however, each provide a vector measurement that includes both a magnitude and, at least implicitly, a direction, as velocity and acceleration are both vector quantities. Velocity sensors and acceleration sensors each may be referred to herein as "motion sensors."

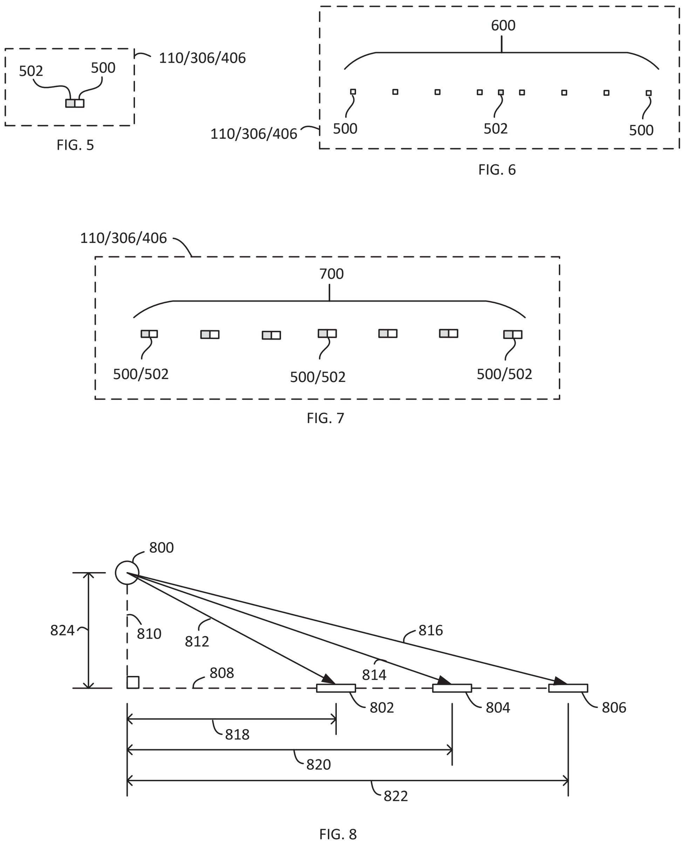

FIGS. 5-7 schematically illustrate example groupings of seismic sensors suitable for use in any of the survey types described above. In the arrangement of FIG. 5, each sensor location comprises a single pressure sensor 500 collocated with a single motion sensor 502. In the arrangement of FIG. 6, each sensor location comprises a set of pressure sensors 500 forming a single pressure sensor group 600. A motion sensor 502 is disposed substantially at the center of pressure sensor group 600. (It is also possible to employ a similar arrangement in which a single pressure sensor is disposed among a group of motion sensors.) Typically, the signals generated by sensors forming a sensor group are combined or aggregated in some way, such as by summation and/or averaging. Such combination or aggregation may be accomplished in any suitable manner, such as in an analog domain using appropriate electrical coupling, or in a digital domain using digital data processing. In general, a sensor group may include any number of sensors and may comprise either pressure sensors or motion sensors. Normally, however, only measurements of the same type in a group (e.g., pressure, velocity, or acceleration) would be subject to combination or aggregation. Thus, in the particular arrangement illustrated in FIG. 6, the measurements of pressure sensors 500 may be combined or aggregated into a single signal, while the measurements of motion sensor 502 would be preserved as a separate signal. In the arrangement of FIG. 7, each sensor location comprises a group 700 of collocated pressure sensors 500 and motion sensors 502. In the latter arrangement, one aggregated signal can be generated from the pressure sensors in the group, while another aggregated signal can be generated from the motion sensors in the group. Various other permutations of the arrangements of FIGS. 5, 6 and 7 are also possible. For example, any of these arrangements may comprise pressure sensors only or motion sensors only.

### Offsets in Marine Seismic Surveys

FIG. 8 is provided to illustrate the concept of offset in marine seismic surveys. In the figure, circle 800 represents a source, while each of rectangles 802, 804, 806 represents a sensor or sensor group. For example, sensors or sensor groups 802-806 may represent sensors disposed along the length of a single streamer 104, or may represent sensors in distinct seismic nodes or sensors disposed within an ocean bottom cable. Dashed line 808 depicts an inline direction. Dashed line 810 depicts a crossline direction orthogonal to the inline direction. Typically, a vessel towing a source would follow a sail path parallel to inline direction 808.

The distance between a source and any one sensor or sensor group constitutes an offset. Such an offset may be measured from the source to a single sensor, or to any one of the sensors within a sensor group, or to the center of a sensor group. Three different example offsets are illustrated in the drawing, ranging in length from a smallest offset 812, to an intermediate length offset 814, to a largest offset 816. A distance along the straight line path between a source and a given sensor or sensor group, as depicted by arrows 812-816, is commonly referred to as a "seismic offset" or simply an "offset." A distance along direction 808 between a source and the inline projection of a sensor or sensor group is commonly referred to as an "inline offset." Thus, sensor or sensor group 802 defines a smallest inline offset 818 with respect to source 800, sensor or sensor group 804 defines an intermediate length inline offset 820 with respect to the source, and sensor or sensor group 806 defines a largest inline offset 822 with respect to the source. Similarly, a distance along direction 810 between a sensor or sensor group and the crossline projection of the source is commonly referred to as a "crossline offset." In the illustrated example, each of sensors or sensor groups 802-806 defines the same crossline offset 824 with respect to source 800.

The term "offset" as used herein refers to any of the above-described distances.

### Example Computer System

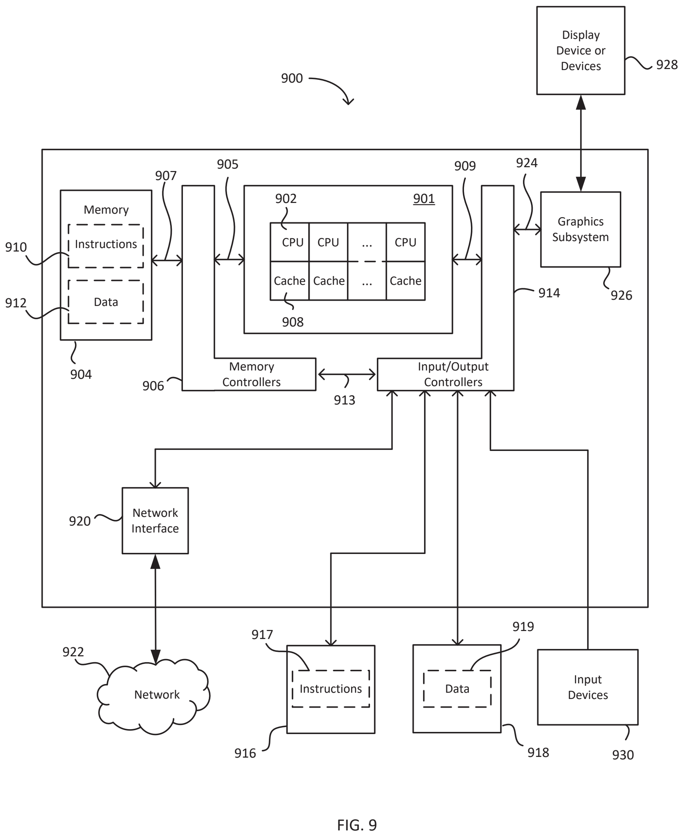

Various types of computing devices may be used in conjunction with embodiments. FIG. 9 is a block diagram logically illustrating a representative example of such a computer system 900 that may be used to perform any of the methods described herein or to implement equipment described herein. For example, a computing device such as computer system 900 may be used to execute survey instructions stored in a non-transitory computer readable medium to control equipment during the performance of a marine seismic survey, to manufacture geophysical data products as described herein, to control the activations of sources during a survey, and/or to de-blend data gathered during a marine seismic survey. Persons having skill in the art and having reference to this disclosure will appreciate that suitable computer system architectures may vary and that alternative or additional types of computing devices or controllers may also be employed in conjunction with any of the embodiments described herein. Computer system 900 is therefore shown by way of example and not by way of limitation.

Computer system 900 includes a core/cache complex 901 that contains one or more central processor unit ("CPU") cores 902, each of which is associated with one or more levels of high-speed cache memory 908. The core/cache complex is in turn coupled to one or more high-speed memory controllers 906, as indicated at 905, and to one or more input/output controllers 914, as indicated at 909. The memory controllers and the input/output controllers may additionally be coupled to one another via one or more high-speed interconnects 913.

The memory controllers may be coupled to a system memory 904 by any suitable means, such as via a high-speed memory bus 907. The memory controllers facilitate interactions between the system memory and the core/cache complex as well as between the system memory and the input/output controllers. System memory 904 typically comprises a large array of random-access memory locations, often housed in multiple dynamic random-access memory ("DRAM") devices, which in turn may be housed in one or more dual inline memory module ("DIMM") packages, as shown. Each core 902 can execute computer-readable instructions 910 stored in the system memory, and can thereby perform operations on data 912, also stored in the system memory.

The input/output controllers may be coupled to respective subsystems as indicated in the drawing or to other subsystems not shown in the drawing. Non-limiting examples of such subsystems include a graphics subsystem 926, a network interface 920, one or more non-transitory computer-readable media such as computer-readable medium 916 and computer-readable medium 918, or equipment associated with a marine seismic survey.

Network interface 920 may facilitate interactions between components of the computer system and an external network 922. Non-limiting examples of network 922 include a local area network, a wide area network, the Internet, or any combination of these.

Non-limiting examples of non-transitory computer-readable media include so-called solid-state disks ("SSDs"), spinning-media magnetic disks, optical disks, flash drives, magnetic tape, and the like. The storage media may be permanently attached to the computer system or may be removable and portable. In the example shown, medium 916 has instructions 917 (software) stored therein, while medium 918 has data 919 stored therein. Operating system software executing on the computer system may be employed to enable a variety of functions, including transfer of instructions 910, 917 and data 912, 919 back and forth between the storage media and the system memory.

In embodiments that include a graphics subsystem, one or more of the input/output controllers may be coupled to the graphics subsystem by any suitable means, such as by a high-speed bus 924. The graphics subsystem may in turn be coupled to one or more display devices 928. While display devices 928 may be located in physical proximity to the rest of the components of the computer system, they may also be remotely located. Software running on the computer system may generate instructions or data that cause the graphics subsystem to display images, data, and/or user interface elements on display devices 928. Such software may also generate instructions or data that cause the display of such elements on one or more remotely located display devices (for example, display devices attached to a remotely located computer system) by sending the instructions or data over network 922 using an appropriate network protocol. The graphics subsystem may comprise one or more graphics processing units ("GPUs") to accelerate the execution of instructions or to implement any of the methods described herein.

Computer system 900 may represent a single, stand-alone computer workstation that is coupled to input devices 930 such as a keyboard and pointing device. It may also represent one of the nodes in a larger, multi-node or multi-computer system such as a cluster, in which case access to its computing capabilities may be provided by software that interacts with and/or controls the cluster. Nodes in such a cluster may be co-located in a single data center or may be distributed across multiple locations or data centers in distinct geographic regions. Furthermore, computer system 900 may represent an access point from which such a cluster or multi-computer system may be accessed and/or controlled. Any of these or their components or variants may be referred to herein with phrases such as "computing apparatus," a "computing device," or a "computer system."

In example embodiments, data 919 may correspond, for example, to sensor measurements or other data recorded during a marine geophysical survey, or may correspond to survey plan instructions for implementing any of the surveys described herein, or may correspond to data such as de-blended signals that are derived from sensor measurements. Instructions 917 may correspond to instructions for performing any of the methods described herein. In such embodiments, instructions 917, when executed by one or more computing devices such as one or more of CPU cores 902, cause the computing device to perform operations described herein on the data, producing results that may be stored in one or more non-transitory computer-readable media such as medium 918. In such embodiments, medium 918 constitutes a geophysical data product that is manufactured by using the computing device to perform methods described herein and by storing the results in the medium.

Geophysical data product 918 may be stored locally or may be transported to other locations where further processing and analysis of its contents may be performed. If desired, a computer system such as computer system 900 may be employed to transmit the geophysical data product electronically to other locations via a network interface 920 and a network 922 (e.g., the Internet). Upon receipt of the transmission, another geophysical data product may be manufactured at the receiving location by storing contents of the transmission, or processed versions thereof, in another non-transitory computer readable medium. Similarly, geophysical data product 918 may be manufactured by using a local computer system 900 to access one or more remotely-located computing devices in order to execute instructions 917 remotely, and then to store results from the computations on a medium 918 that is attached either to the local computer or to one of the remote computers. The word "medium" as used herein should be construed to include one or more of such media.

A variety of known devices may be used to control seismic sources during a marine seismic survey, including computing devices according to FIG. 9.

### Impulsive and Non-Impulsive Marine Seismic Sources

Impulsive marine seismic sources produce a brief, sharp pressure impulse in the water responsive to a control pulse generated by the associated seismic source controller. A control pulse used for activating an impulsive source is short -- typically instantaneous or near-instantaneous in nature. Non-impulsive sources, on the other hand, are not driven by a short control pulse and do not produce a sharp pressure impulse in the water. Rather, non-impulsive sources are driven by a time-sustained control signal, such as by a sweep signal that varies over a period of time, and produce a sustained series of pressure wave vibrations in the water. In some applications, the pressure wave vibrations produced by a non-impulsive source may exhibit a pattern that sweeps through a range of frequencies over time as determined by the sweep control signal. In other applications, they may remain centered around a single resonant frequency of the source transducer.

Examples of non-impulsive sources include marine vibrators, which produce pressure wave vibrations in the water that correspond to the time-varying frequencies in a corresponding sweep control signal.

Examples of impulsive sources include air guns and sparkers. An air gun source uses compressed air that is suddenly released to produce a pressure impulse in the water when the source is activated by a control pulse. Sparker sources also produce a pressure impulse in the water responsive to a control pulse, but they do so by a different mechanism. In the case of a sparker source, the control pulse causes a large amount of stored electric energy to be discharged into a sparker source element that is disposed in the water. The discharge causes a conductive spark to occur in the water at the sparker element, which instantaneously creates a small bubble of vapor, which in turn creates a very fast localized change in pressure in the water. Thus, the creation of the bubble produces a brief pressure impulse in the water. Each such pressure impulse created by the activation of a sparker source element is omnidirectional in nature.

Sparker source elements may take a variety of forms. For example, a sparker source element may be an electrode, or may be as simple as an exposed wire tip. Other forms of sparker source elements are also possible. Moreover, the types of electrical return paths used to facilitate the conductive spark produced by a sparker source element may also vary. In some cases, for example, the return path may be provided by an electrically conductive frame to which the sparker element is mounted. In other cases, the conductive spark may occur between two adjacent wire tips. Other types of return paths are also possible.

To overcome the smaller amplitude of the pressure impulse that is emitted by a single sparker source element relative to that of an air gun, it known to arrange multiple sparker source elements in a planar grid pattern and to activate all of the elements in the planar grid simultaneously. Doing so causes a combined pressure impulse in the water having a larger amplitude than the impulse that would be produced by a single sparker source element activated alone.

### Example Planar Sparker Source Array

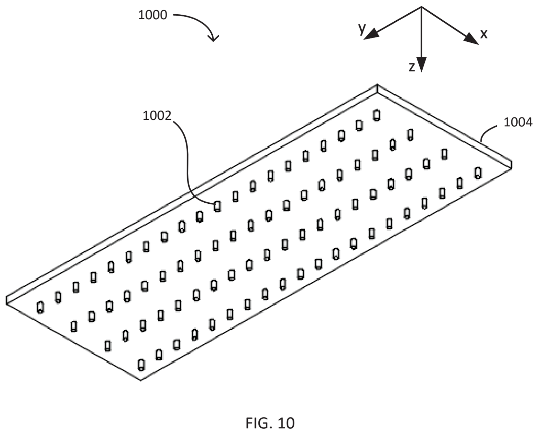

FIG. 10 illustrates an example planar (i.e., flat) array 1000 of sparker source elements 1002. The source elements are arranged in a planar pattern that is parallel to the x-y plane, and the elements themselves point downward in the z direction. Such a pattern has a linear inline cross sectional profile (the cross sectional profile taken along a y-z plane), and also has a linear crossline cross sectional profile (the cross sectional profile taken along an x-z plane). The planar array in the illustration comprises four rows of source elements, with twenty source elements in each row. Some planar sparker arrays may contain more or fewer source elements than the example array illustrated.

The source elements are fixedly attached to a frame 1004, the primary function of which is to hold the source elements in the planar pattern illustrated while the array is towed in a body of water for use in a marine seismic survey. In some examples, the frame may comprise one or more pieces of rigid material.

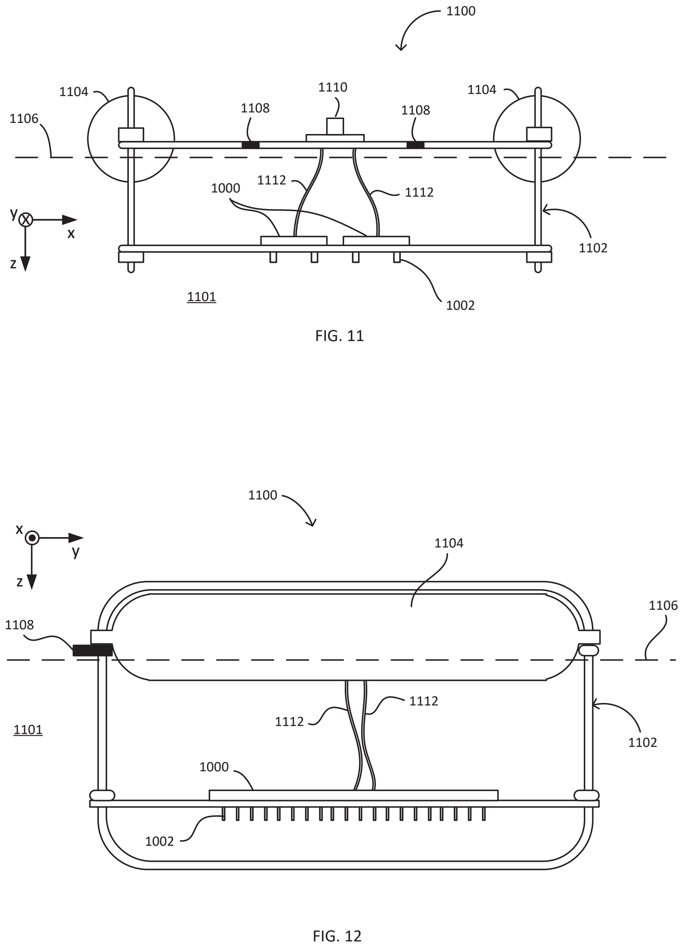

FIGS. 11 and 12 are inline and crossline views, respectively, showing a planar sparker source 1100 that is configured to be disposed in a body of water 1101 and towed during a marine seismic survey. In this example, source 1100 includes a planar array 1000 of sparker elements 1002 such as those described above. The array of sparker elements is attached to a sled 1102. The sled includes two floats 1104 that are arranged to keep array 1000 in a horizontal orientation, parallel with the plane of water surface 1106. The sled also includes one or more tow points 1108 to which a tow line may be fastened. Such a tow line typically includes one or more electric cables for coupling an electric charge generated onboard a tow vessel to the sparker array attached to the sled. The electric cables may be attached to the sled via one or more wiring buses 1110 on the sled, and the wiring buses may themselves be electrically coupled to the sparker source elements via one or more wires 1112. During tow, the sled keeps the planar array of sparker source elements below the water surface with all of the source elements in the array pointing downward into the body of water in the positive z direction, as shown. Typically, the planar array of sparker source elements is disposed at a depth between about 20 cm to 60 cm beneath the water surface when in use during a survey.

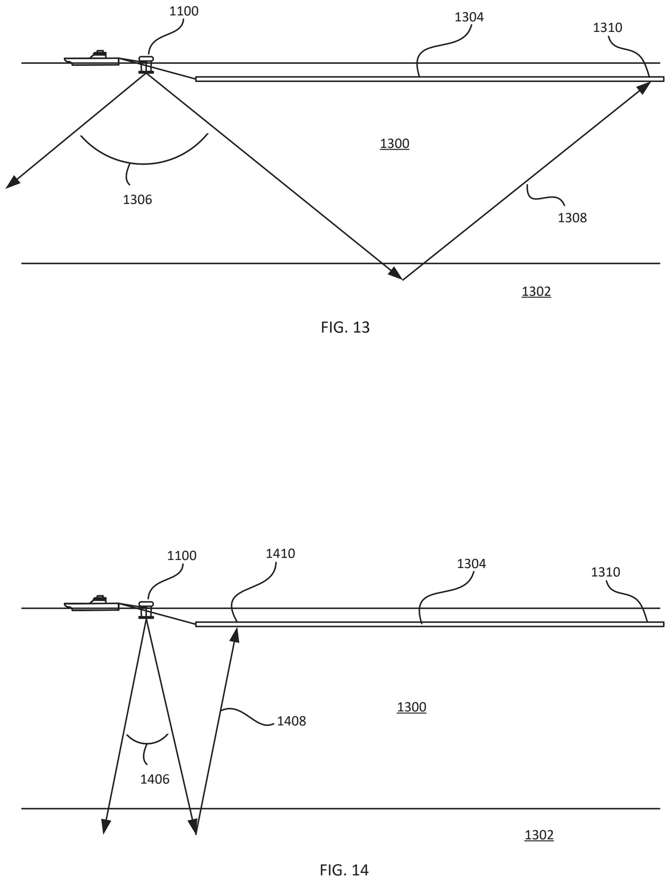

The behavior of planar sparker source arrays such as array 1000 will now be described with reference to FIGS. 13 and 14, both of which are crossline views of a marine seismic survey in which a planar sparker source array such as source 1100 is used to generate acoustic energy that travels downward through a water volume 1300, penetrates into a subsurface 1302, is reflected back upward through the water volume, and is received by geophysical sensors disposed along the lengths of one or more towed streamers 1304.

By way of background, sparker sources are often used to perform so-called ultra high resolution three-dimensional ("UHR3D") surveys because the frequency spectra of the acoustic energy produced by sparker elements is in a range between about 300 Hz to about 4 kHz. In such surveys, it is desirable to use reflected energy in the higher frequency ranges (i.e., between about 1 kHz to about 4 kHz) during the process of imaging features in the subsurface. This is because the minimum size of the subsurface features that can be detected during a survey is related to the wavelength of the acoustic energy that is used to illuminate the features. In general, the smaller the wavelengths used, the smaller the features that can be detected. Thus, it is desirable to use the higher frequency ranges of acoustic energy in UHR3D surveys so that features can be detected in the subsurface with higher resolution relative to surveys that use lower frequencies to illuminate the subsurface can detect.

It is also desirable in such surveys to acoustically illuminate each feature from a variety of angles because doing so can enhance the clarity of the features in images that are produced from the recorded survey data. Thus, it is desirable to record reflected energy at multiple offset distances from each activation of the source, since the energy received at different offsets generally represents energy that is reflected at different angles from the subsurface.

The diagram in FIG. 13 illustrates the behavior of a typical planar sparker source array for acoustic energy emitted at lower frequencies (frequences less than or equal to about 500 Hz). As can be seen from the drawing, energy at these lower frequencies is emitted by the planar array over a relatively wide range of angles 1306. Accordingly, some of the reflected energy 1308 at these frequencies reaches geophysical sensors that are disposed near the tail end of the streamers at the longest offsets 1310 from the source.

The diagram in FIG. 14 illustrates the behavior of a typical planar sparker source array for emitted acoustic energy at higher frequencies (frequences greater than or equal to about 1 kHz). As can be seen, energy at these higher frequencies is emitted by the planar array over a range of angles 1406 that is much smaller than range 1306. Indeed, most of the higher frequency energy is emitted vertically downward. Consequently, most of the reflected energy 1408 at these higher frequencies reaches only the geophysical sensors that are disposed near the front end of the streamers at the smallest offsets 1410 from the source. Virtually no higher frequency energy reaches the geophysical sensors that are disposed at the longest offsets 1310. This is undesirable because, as was explained above, it is necessary to record higher frequency energy at a variety of offsets, including the longer offsets, in order to produce a clear image of small features disposed in the subsurface. Furthermore, when the condition of the sea state is poor, the plane of sparker source elements in source 1100 tilts erratically from the horizontal, which causes the direction of the relatively narrow beam of higher frequency energy emitted by the source to vary erratically as well.

The reason for the directionality observed in planar array 1000, and for the behaviors illustrated in FIGS. 13 and 14, relates to the overall size of array 1000, the wavelength of acoustic energy at the frequencies mentioned, and the constructive and destructive interference that occurs between the omnidirectional pressure waves emitted by each of the sparker elements in the array when the source is activated.

It is illustrative in this regard to consider a notional spherical array of receivers, each of which is disposed at a large distance from array 1000 and wherein the spherical center of the receiver array coincides with the acoustic center of the source array. Consider also that a typical planar array 1000 may have a size on the order of 0.5 m x 0.5 m, that the wavelength of acoustic energy in warm water at 500 Hz is 2.96 m, and that the wavelength of acoustic energy in warm water at 4 kHz is 0.37 m. Assume further that the radius of the notional sphere of receivers is perhaps 100 m or larger. At 500 Hz, the wavelength of acoustic energy is large relative to the size of the planar array. Accordingly, at this frequency and for any given one of the receivers on the sphere, the differences in the phase of the pressure waves reaching the receiver from different emitters in the source array is relatively small in terms of the wavelength of the acoustic energy (2.96 m). Thus, at this frequency, the radiation pattern of the source array appears relatively uniform in all directions, which results in the pattern observed in FIG. 13. At 4 kHz, however, and for any given one of the receivers on the sphere, the differences in the phase of the pressure waves reaching the receiver from different emitters in the source array can be quite large in terms of the wavelength of the acoustic energy (0.37 m). Thus, at this frequency, the radiation pattern of the source array is not uniform in all directions, but rather exhibits a high degree of variation when observed at different angles from the source array, which results in the pattern observed in FIG. 14.

In general, for any given source array size, the higher the frequency, the larger the effect of constructive and destructive interference on the directional response of the array.

### Example Curved Sparker Source Arrays

The above problems can be beneficially addressed by constructing a pattern of impulsive source elements, such as marine sparker source elements, wherein the pattern is curved in at least one direction. For example, multiple impulsive source elements may be arranged in a pattern having a vertical cross sectional profile that is curved. By way of further example, the elements may be arranged to form a curve whose shape is convex toward either the negative z or the positive z directions, such that the curve is either concave upward or concave downward. These and other curved patterns can be employed to cause the far field radiation pattern of the source elements to be wider at higher frequencies (e.g., frequencies from about 1 kHz to about 4 kHz) than the radiation pattern of a planar array of source elements at the same frequencies. This is so because curving the pattern of source elements in the source array changes the nature of the constructive and destructive interference that occurs in the near field between the omnidirectional pressure waves that are emitted by the individual source elements in the array.

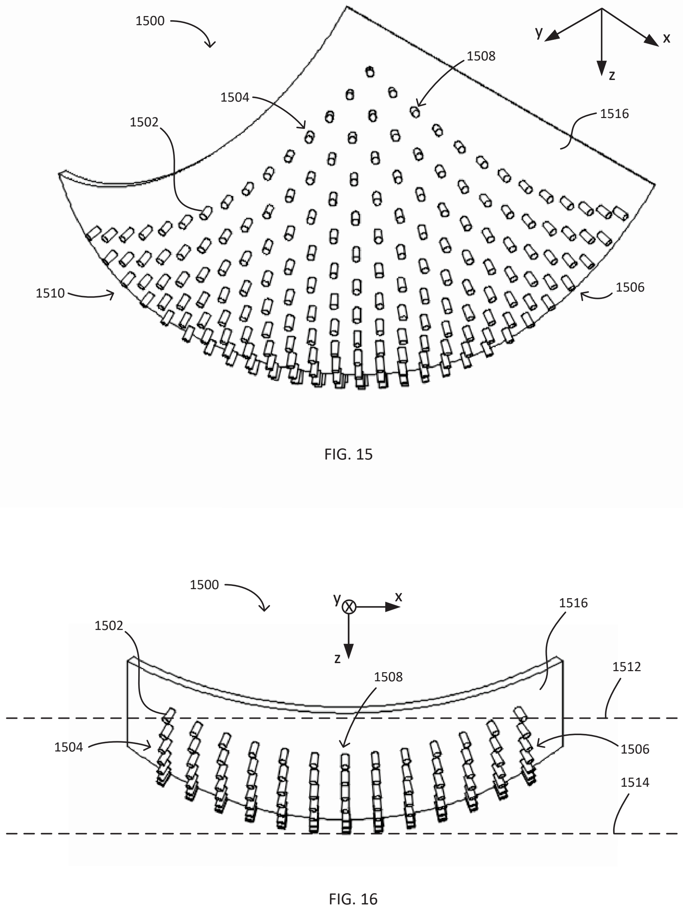

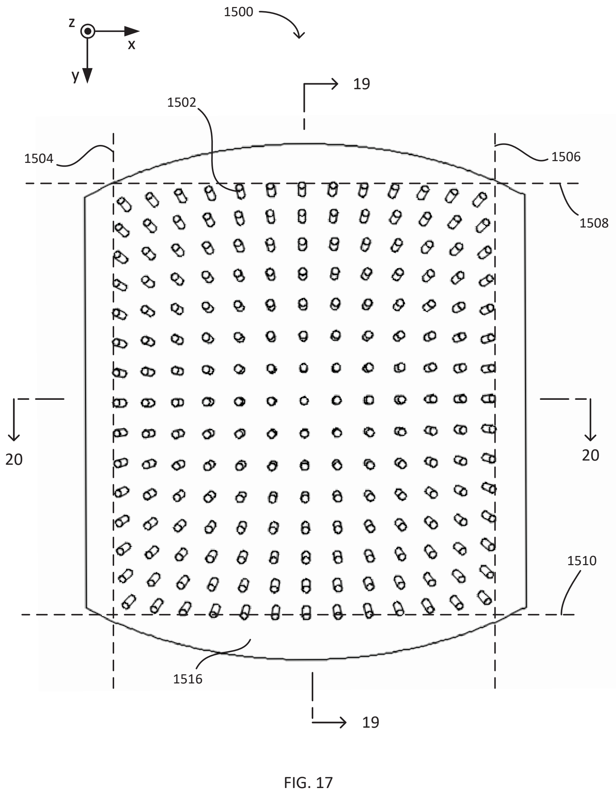

FIG. 15 is an oblique view illustrating an example curved array 1500 of sparker source elements 1502 in accordance with embodiments. FIG. 16 is an orthogonal front view (viewed horizontally in the positive y direction) of array 1500, and FIG. 17 is an orthogonal bottom view (viewed vertically in the negative z direction) of the same array.

As can be seen from these views, curved array 1500 includes multiple marine sparker source elements 1502. The tips of the sparker elements, at which the vapor bubbles are created during activations of the elements, are arranged in a three-dimensional pattern extending in x, y, and z mutually orthogonal directions, as shown. In the illustrated embodiment, the pattern has a width from a left extent 1504 to a right extent 1506 of the pattern in the x direction, a length from a front extent 1508 to a rear extent 1510 of the pattern in the y direction, and a depth from an upper extent 1512 to a lower extent 1514 of the pattern in the z direction.

The array may be configured to be towed in a body of water in a variety of orientations. In the illustrated orientation, the pattern defined by the source elements is oriented such that its x direction corresponds to the crossline direction, its y direction corresponds to the inline direction, and its z direction is oriented vertically in a manner such that at least one vertical cross sectional profile of the source element pattern is concave upward. As will be described in more detail below, in other embodiments, the pattern of source elements may be oriented in an opposite direction from that illustrated in FIG. 15, such that at least one vertical cross sectional profile of the source element pattern is concave downward.

Note that the number of sparker source elements shown in array 1500 is chosen here only for the sake of illustration. In other embodiments, any number of source elements may be used, and the source elements may be arranged differently than illustrated here.

Note also that, while a frame 1516 in the form of a shell is shown supporting the sparker source elements in the embodiment of FIG. 15, in other embodiments, other means may be used to hold the source elements in a fixed spatial relationship to one another, depending on the needs of a particular deployment. In the embodiment of FIG. 15, the frame may comprise a continuous surface with apertures therein for receiving each of the sparker source elements.

Note further that, in any of the curved array embodiments disclosed herein, it is not the frame or the shell that produces the desired spatial response of the source array, nor do source arrays according to embodiments rely on any form of reflector structure or reflector surface for creating the desired spatial response of the array. Rather, source arrays according to embodiments achieve their desired far field spatial response by virtue of the near field constructive and destructive interference that occurs between the individual omnidirectional pressure impulses that are generated by the source elements in the array during an activation of the source, and by virtue of the three dimensional pattern in which the source elements are arranged (and, thus, in which their respective pressure impulses occur).

In any embodiments, including in the embodiment of FIG. 15, a frame to which the source elements are fixedly attached may be designed so as to be substantially transparent to acoustic energy at the frequencies of interest in a marine seismic survey in which the source is to be employed. By way of background, a body is generally considered to be acoustically transparent in water for a given range of frequencies when its bulk impedance is close to that of water and the body does not have features around which sound cannot diffract at those frequencies. As a practical matter, however, and for purposes of this disclosure, a body will be considered "substantially acoustically transparent" if the members that make up the body have sizes (e.g., diameters, in the case of elongate members) that are less than about 0.1 wavelength at the highest frequency of interest. For example, a body that comprises elongate members having diameters less than about 37 mm would be considered to be substantially acoustically transparent to pressure waves at 4 kHz in warm water.

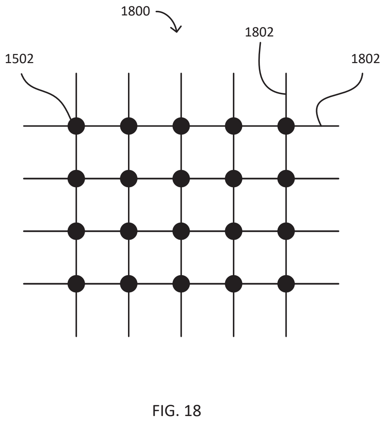

One non-limiting example of a frame that is considered to be substantially acoustically transparent for purposes of this disclosure may take the form of a grid of crossing rigid members 1802, such as in the lattice structure 1800 illustrated in FIG. 18. In lattice 1800, each of the rigid members has a diameter less than or equal to about 37 mm, and the rigid members are spaced apart to a degree that is adequate to allow acoustic energy to pass between them (e.g., they may be spaced apart by a distance that is greater than or equal to the diameter of the rigid members). Source elements 1502 may be attached to the frame either between or at the points at which the rigid members cross. Any other frame structure that is acoustically transparent to the same degree as is lattice structure 1800 at frequencies on the order of 4 kHz may also be considered to be "substantially acoustically transparent" for purposes of this disclosure. In various embodiments that employ a lattice structure of crossing rigid members, the rigid members need not necessarily be oriented orthogonally to one another as illustrated in FIG. 18. For example, in some embodiments, the rigid members may form part of a polyhedron structure. By way of non-limiting example, the rigid members may form a polyhedron structure analogous to that formed by the faces of a soccer ball, such that a vertical cross sectional profile of the structure defines a discretized curve. Other configurations are also possible.

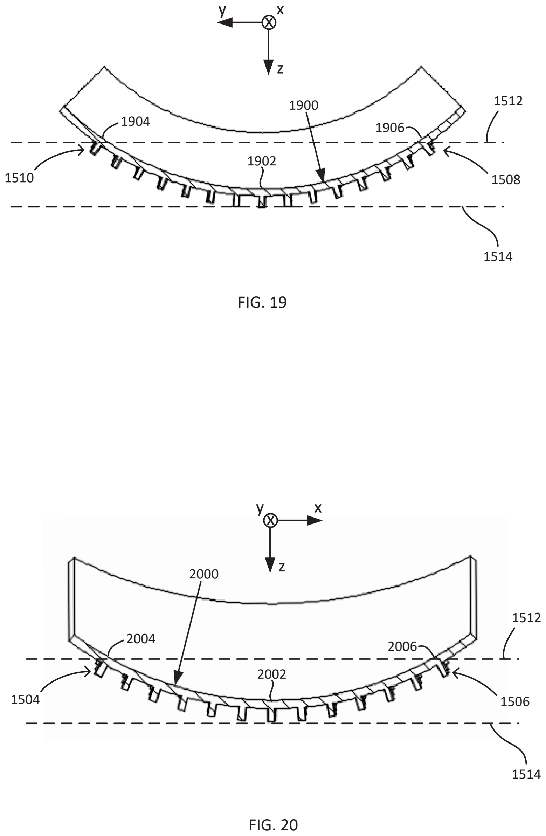

In arrays according to embodiments, at least one vertical cross sectional profile of the three dimensional pattern formed by the source elements defines a curve. In the example of array 1500, both an inline cross sectional profile of the pattern and a crossline cross sectional profile of the pattern define respective curves. This becomes evident with inspection of FIG. 19 and FIG. 20. Note that, in the sectional views of FIG. 19 and FIG. 20, the portions of the sparker source elements that protrude to the interior side of the frame are not shown so as not to overly complicate the drawing. Note also that it is the source elements themselves that define the "curved" patterns described below. Thus, in various embodiments, the frame or shell to which the source elements are attached does not necessarily need to define a curve, although it may.

FIG. 19 represents the cross section indicated at 19-19 in FIG. 17. This cross section is referred to herein as an "inline" cross sectional profile because it represents a section of the three dimensional pattern that lies in a plane parallel to the inline direction and parallel to the depth direction. As can be seen from this view, the inline cross sectional profile of the source element pattern of array 1500 defines a curve 1900. In this example, a centermost point 1902 along curve 1900 has a positive z offset relative to outermost points 1904, 1906 along the curve. Furthermore, in this case, a line joining any two points on curve 1900 lies above (has a negative z offset from) the curve. Thus, the inline cross sectional profile illustrated in FIG. 19 is convex toward the z direction and is concave upward. Indeed, in the case of array 1500, the pattern formed by source elements 1502 is convex in the z direction in all inline cross sectional profiles that pass through the pattern.

The curved nature of the inline cross sectional profile of array 1500 causes higher frequency energy emitted by the array to radiate in a wider range of inline angles than does the higher frequency energy emitted by a planar array of source elements.

FIG. 20 represents the cross section indicated at 20-20 in FIG. 17. This cross section is referred to herein as a "crossline" cross sectional profile because it represents a section of the three dimensional pattern that lies in a plane parallel to the crossline direction and parallel to the depth direction. As can be seen from this view, the crossline cross sectional profile of the source element pattern of array 1500 defines a curve 2000. As was the case in the example of FIG. 19, in this example a centermost point 2002 along curve 2000 has a positive z offset relative to outermost points 2004, 2006 along the curve. Furthermore, in this case, a line joining any two points on curve 2000 lies above (has a negative z offset from) the curve. Thus, the crossline cross sectional profile illustrated in FIG. 20 is also convex toward the z direction and is concave upward. Indeed, in the case of array 1500, the pattern formed by source elements 1502 is convex in the z direction in all crossline cross sectional profiles that pass through the pattern.

The curved nature of the crossline cross sectional profile of array 1500 causes higher frequency energy emitted by the array to radiate in a wider range of crossline angles than does the higher frequency energy emitted by a planar array of source elements.

Because both the inline and the crossline cross sectional profiles of array 1500 are curved as described above, array 1500 emits higher frequency energy in a wider cone relative to the cone width of the higher frequency energy emitted by a planar array of source elements.

Note that the cross sectional profiles illustrated in FIGS. 19 and 20 are circular, such that each profile has a constant radius of curvature. In other embodiments, the curve defined by a cross sectional profile of the pattern of source elements may be other than circular. For example, in some embodiments, the curve may be elliptical. In still other embodiments, the curve may be parabolic. In yet other embodiments, the curve may correspond to a portion of a polyhedron structure. Other curvatures are also possible, as are different degrees of curvature, each such variation resulting in a unique far field radiation pattern for the higher frequency energy that is emitted by the array.

Note also that, in the illustrated embodiment, source elements 1502 are arranged in a regular grid of rows and columns. In other embodiments, the source elements need not be arranged in a regular pattern and need not form rows or columns, but may be arranged differently so as to achieve a desired effect on the directionality of higher frequency energy that is radiated by the group of source elements so arranged. In some embodiments, for example, the source elements may be arranged in repeating concentric patterns, such as in concentric circles. Other arrangements are possible in other embodiments.

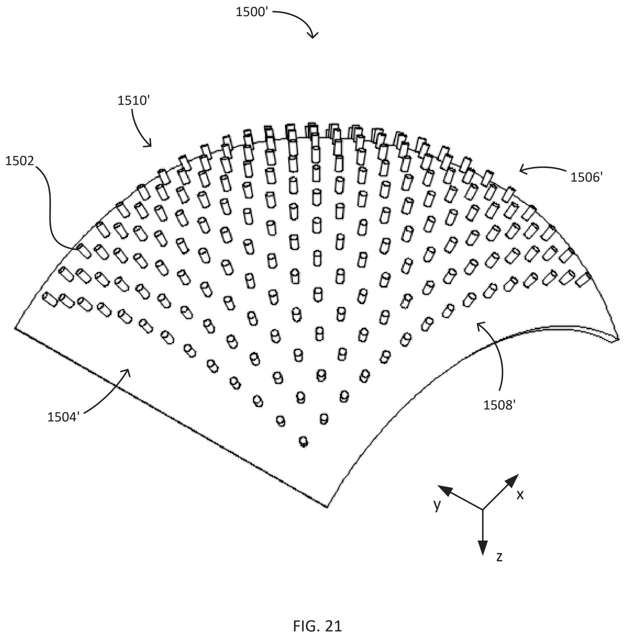

As was mentioned above, in some embodiments, the curved source element array may be vertically oriented in the opposite direction from the vertical orientation illustrated in FIG. 15 and yet may exhibit a substantially identical far field radiation pattern as does the embodiment of FIG. 15. FIG. 21 illustrates such an example.

Referring now to FIG. 21, the pattern of source elements in curved source array 1500' is oriented such that its width (from left extent 1504' to right extent 1506') is oriented in the x direction, its length (from front extent 1508' to rear extent 1510') is oriented in the y direction, and its depth is oriented vertically in such a manner that the curve defined by the source element pattern is concave downward.

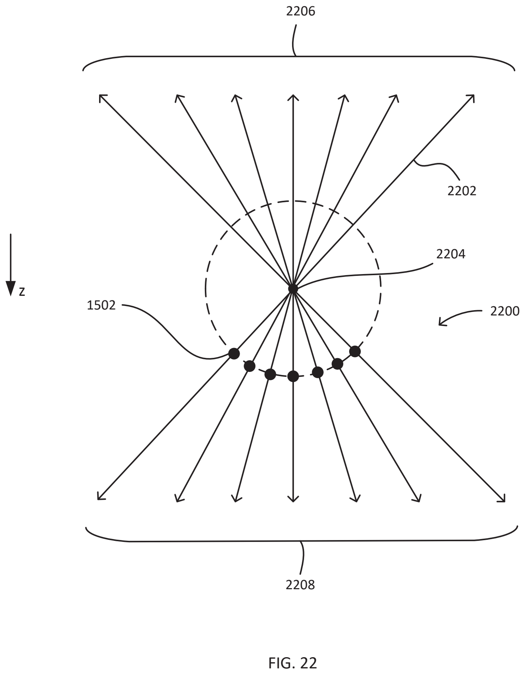

The reason curved arrays 1500 and 1500' yield similar or identical far field radiation patterns may be better understood with reference to FIG. 22. FIG. 22 is a schematic diagram illustrating a circularly curved array 2200 of sparker source elements 1502 disposed in a body of water. For the sake of discussion, assume that the source elements are activated simultaneously and that, when activated, each emits an omnidirectional pressure wave. Assume further that the source elements are mounted in such a way that the array is substantially acoustically transparent. As can be seen in the drawing (see the orientation of the vertical z axis indicated in the figure) the pattern defined by the source elements in array 2200 is concave upward. When activated, each of the source elements emits an omnidirectional pressure wave 2202. In the near field (the Fresnel region), all of the emitted pressure waves converge through a focal point 2204 on the concave side of the pattern and diverge on the convex side of the pattern. The result is that the far field radiation pattern in the negative z direction (2206) is identical to the far field radiation pattern in the positive z direction (2208). Both far field radiation patterns may be thought of as having originated at the focal point. In practice, the upward and downward far field patterns may not be precisely identical, and they need not be precisely identical in many applications.

The effect just described may be achieved with any curved array pattern having a single focal point. For example, the effect may be achieved with an array that defines a partial ellipse or with an array that defines a parabolic curve.

Note that, depending on the aggregate power level of the pressure waves reaching the focal point in such embodiments, cavitation may occur in the water at the location of the focal point. This is because all of the pressure waves converge at the focal point. Such cavitation may or may not be desirable in a given application. Accordingly, for embodiments in which it is desired to avoid such cavitation, an array of source elements may be configured such that the pressure waves emitted by the source elements do not all converge at a common focal point. A non-limiting example of such an embodiment would be an array having a first subset of source elements that defines a first curve and a second subset of source elements that define a second curve, wherein the first curve is different from the second curve. In other embodiments, the source elements may simply define patterns that do not share a common focal point. In still other embodiments, the source elements may define one or more patterns that do not have any focal points. For purposes of this disclosure, any such pattern may be referred to as a "compound" pattern. In various embodiments, cavitation may be less likely to occur as the focal point of the source element pattern is disposed deeper in the body of water. This is because the ambient water pressure is greater at larger depths, which makes it more difficult for cavitation to occur.

Note further that spatial aliasing effects begin to appear when the spacing between adjacent source elements in an array is greater than half of one wavelength at the highest frequency of interest. Accordingly, in some embodiments, the curved array may be configured such that the spacing between adjacent source elements in the array is not larger than half of one wavelength at the highest frequency of interest for the survey in which the array will be deployed. For example, if it is desired to avoid such spatial aliasing effects entirely, the array may be configured such that the spacing between adjacent source elements is not greater than 18.5 cm for a survey in which 4 kHz represents the highest frequency of interest. In practice, acceptable results may be achieved in such surveys by using a source element spacing that is not greater than about 20 cm.

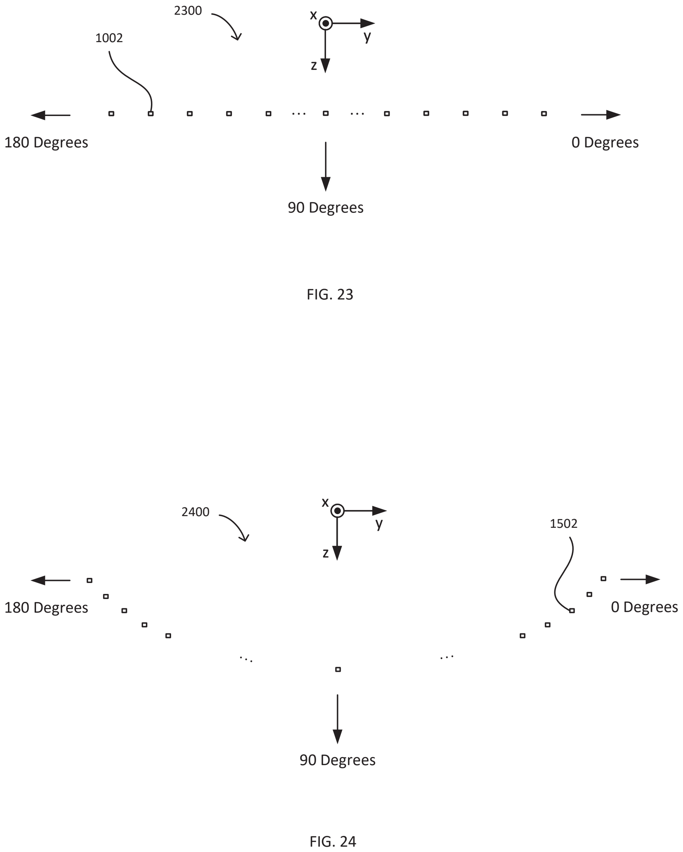

FIGS. 23-28 help to illustrate many of the above principles in operation by comparing the effects of two different spatial patterns of sparker source elements on the directionality of the corresponding source arrays. The two spatial patterns are compared at four different frequencies, from 500 Hz to 4 kHz.

FIG. 23 illustrates the first one of the spatial patterns to be compared, pattern 2300. Pattern 2300 is a linear pattern of sparker source elements oriented parallel to the x-y plane with a 22 mm spacing between the source elements.

FIG. 24 illustrates the second one of the spatial patterns to be compared, pattern 2400. Pattern 2400 is a circularly curved pattern of sparker source elements, wherein the curvature is convex toward the positive z direction (concave upward) and wherein the outermost source elements of the pattern (the elements at the left and the right extents of the pattern) are disposed in a plane that is parallel to the x-y plane. The radius of curvature in pattern 2400 is 0.83 m, and the source elements are spaced 22 mm apart from one another along the curve.

The ellipses in FIGS. 23 and 24 indicate that not all of the source elements are drawn so as not to overly complicate the figures.

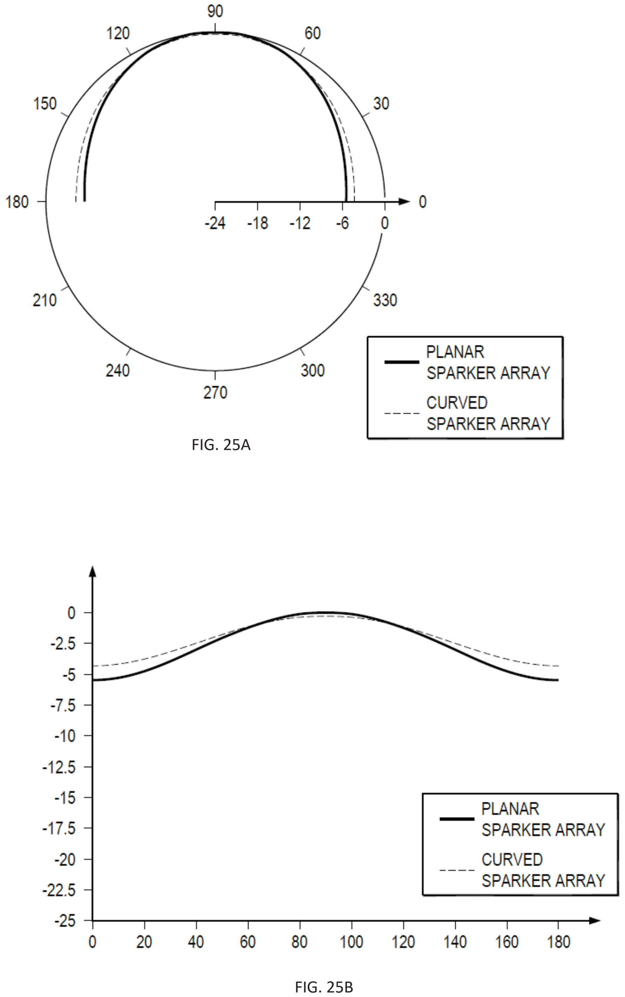

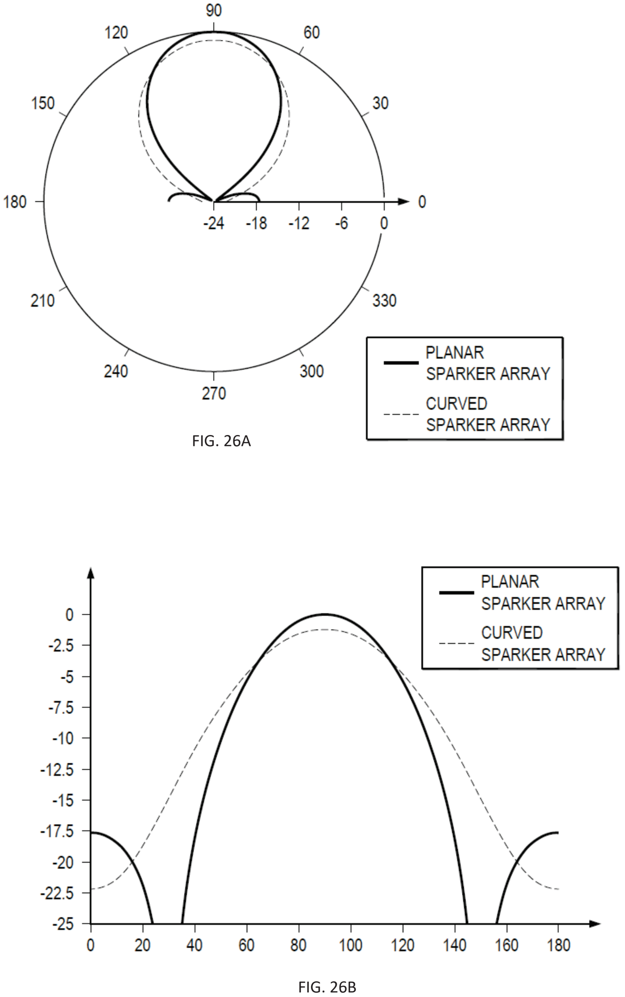

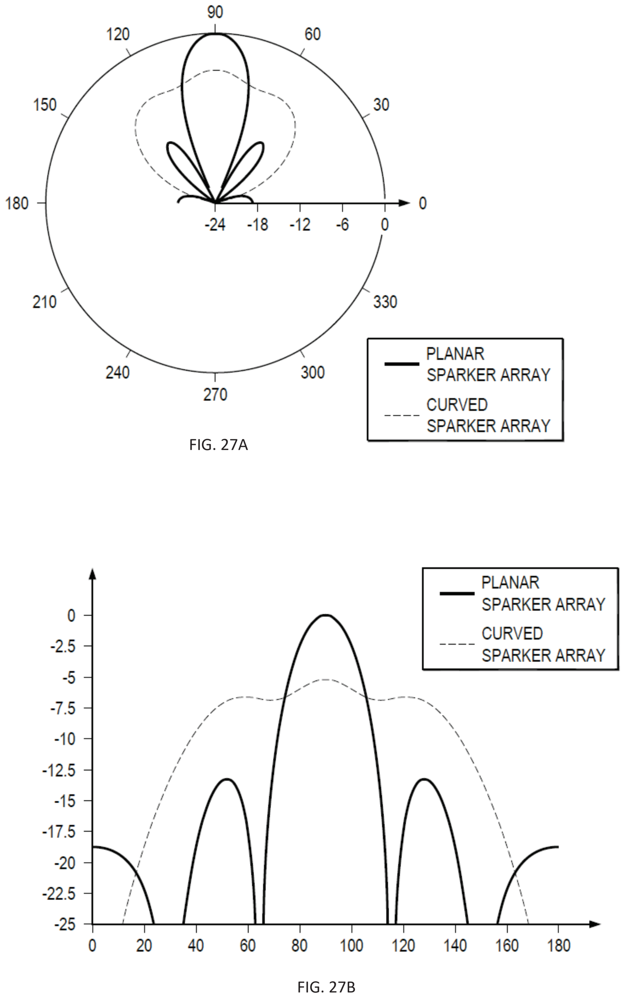

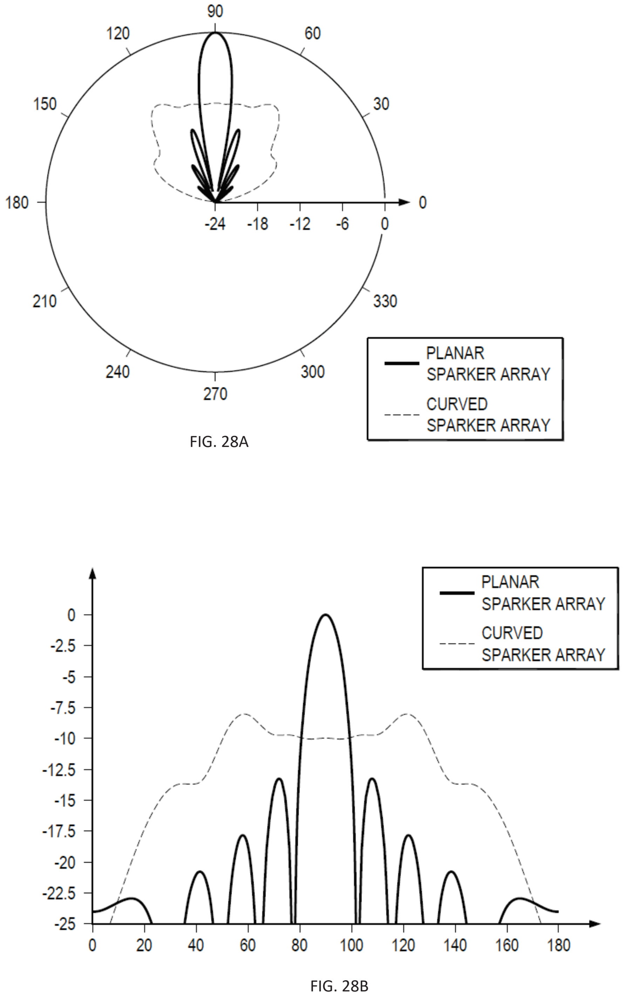

The plots presented in FIGS. 25-28 compare the computer-modeled directionality of the two source element patterns at 500 Hz (FIG. 25), at 1 kHz (FIG. 26), at 2 kHz (FIG. 27), and at 4 kHz (FIG. 28). The solid line curve in each of the plots represents the directionality of the linear source element pattern (pattern 2300). The dashed line curve in each of the plots represents the directionality of the curved source element pattern (pattern 2400).

In each of the plots, 90 degrees represents the far field radiation pattern of the source arrays in a direction vertically downward into the body of water from a center of the respective array (at its point of intersection with the z axis). In the case of linear or planar array 2300, this direction is normal to the plane of the array and, in typical operation, normal to the horizontal plane of the water surface. In the case of curved array 2400, this direction is normal to a plane that is tangent to the array at its midpoint and, in typical operation, normal to the horizontal plane of the water surface. In each of the plots, 0 degrees and 180 degrees represent the far field radiation pattern of the source arrays in opposite horizontal directions from the center of the respective source array.

Each of FIGS. 25-28 includes a polar plot (A) and a cartesian plot (B) of the same dataset so that each dataset may be visualized in two different ways. The unit of measurement along the radii of the polar plots, and along the vertical axes of the cartesian plots, is decibels (dB) relative to the source amplitude level of the linear or planar array in the direction perpendicular to its plane (90 degrees). The unit of measurement around each polar plot, and along the horizontal axis of each cartesian plot, is degrees, indicating a direction away from the source as described above and as illustrated in FIGS. 23 and 24.

Referring now to FIG. 25A and to FIG. 25B, at 500 Hz it can be seen that the directionality of curved array 2400 is similar to that of planar array 2300. That is, at this frequency, both source arrays radiate substantial energy in all directions from 0 degrees to 180 degrees.

Referring now to FIG. 26A and to FIG. 26B, at 1 kHz it can be seen that, while both sources exhibit directional effects, the directional effects of the planar array are more pronounced than are those of the curved array. In particular, the curved array radiates significant energy at all angles from 0 degrees to 180 degrees, whereas the planar source emits no energy at all at angles between about 25 degrees and about 35 degrees, and at angles between about 145 degrees and about 155 degrees.

Referring now to FIG. 27A and to FIG. 27B, at 2 kHz it can be seen that the directional effects of the planar array are even more pronounced, such that additional zeroes occur for the planar array at angles between about 60 and 70 degrees and between about 110 and 120 degrees. While the curved source array exhibits zeroes in the near-horizontal directions between 0 and 10 degrees and between 170 and 180 degrees, both the amplitude and the uniformity of the radiation pattern for the curved source between 10 degrees and 170 degrees are superior to those of the planar source.

Referring now to FIG. 28A and to FIG. 28B, at 4 kHz it can be seen that the superiority of the curved source relative to the planar source is even more pronounced than at 2 kHz. At 4 kHz, the curved source radiates energy in all directions between about 5 degrees and about 175 degrees, while the planar source not only radiates less energy across those angles, but exhibits eight zeroes within that range of angles. Although the curved array radiates at a lower amplitude in the near vertical direction (at or near 90 degrees) at this frequency than does the planar array, the significant increase in radiation by the curved array at other angles helps to increase the signal to noise ratio for receiver channels at larger offsets, such as those disposed toward the tail end of a seismic streamer. Moreover, curved arrays according to embodiments are able to accomplish this effect while leaving the signal to noise ratio of all receiver channels relatively unchanged at lower frequencies.

Given the beneficial directionality effects demonstrated by the curved array in FIGS. 25-28 for frequencies at or below about 4 kHz, it may be desirable in some embodiments to design a curved array of source elements such that the width of the source element pattern or the length of the source element pattern, or both, are less than or equal to about 5 times the wavelength of the highest frequency of interest in a marine seismic survey in which the array will be deployed. For example, for a UHR3D survey, the array may be configured such that the width of the source element pattern is not greater than about 2 m (for beneficial crossline directionality), or such that the length of the source element pattern is not more than about 2 m (for beneficial inline directionality), or both (for beneficial inline and crossline directionality).

In one example class of embodiments, a source element pattern may have a vertical axis. The vertical axis may be a central vertical axis that passes through a vertical center of the pattern, or the vertical axis may not be a central vertical axis that passes through a vertical center of the pattern. The pattern may include at least three source elements, and a z offset of the source elements in the pattern may increase monotonically or may decrease monotonically with a lateral distance of the respective source element from the vertical axis. Each of the embodiments illustrated above, for example, exhibits this characteristic, although other embodiments may differ in this regard.

In another example class of embodiments, a stratified array of source elements may be constructed in which the source elements are disposed in a tiered arrangement. Such an array may include, for example: one or more first source elements disposed on a first horizontal plane having a first z offset; one or more second source elements disposed on a second horizontal plane having a second z offset greater than the first z offset; and one or more third source elements disposed on a third horizontal plane having a third z offset greater than the first z offset and greater than the second z offset; wherein a vertical axis passes through one of the first source elements; wherein at least one of the second source elements is laterally displaced from the vertical axis by a greater distance than are any of the first source elements; and wherein at least one of the third source elements is laterally displaced from the vertical axis by a greater distance than are any of the second source elements. Such a pattern may be disposed in a vertically upward or in a vertically downward orientation. For embodiments in which the tiers do not overlap in the vertical dimension, the z offsets of the source elements in the pattern may be said to be increasing monotonically or decreasing monotonically (depending on the vertical orientation of the pattern) with the lateral distance of the respective source element from the vertical axis. The vertical axis need not be a central vertical axis for the array, although it may be.

In another example class of embodiments, a source element pattern may include source elements disposed in more than two distinct planes passing through the pattern orthogonally to its z direction. Each of the embodiments illustrated above, for example, exhibits this characteristic, although other embodiments may differ in this regard.

In another class of embodiments, a source element pattern may define a curve that is symmetrical about a vertical axis, such as, for example, the source element pattern illustrated in FIG. 24. In other embodiments, a curve defined by the source element pattern may not be symmetrical about a vertical axis. For example, in some embodiments, a source element pattern may define a shape that corresponds to one half of a hemisphere (e.g., one fourth of a sphere). Other variations of this sort are also possible.

If desired, several modifications may be made to a curved array to adjust its radiation pattern further, such as to further improve the uniformity of its radiation pattern in the range of angles between 0 degrees and 180 degrees at frequencies between about 1 kHz and about 4 kHz. In some embodiments, for example, the spacing between the sparker source elements in the array may be adjusted in some portions of the array but not in others, so that the source element spacings are not uniform across the array. In other embodiments, the array may be configured such that not all of the source elements in the array receive the same amount of charge during an activation of the array. For example, a charge divider may be implemented such that two or more subsets of the source elements receive different percentages of an overall charge that is delivered to the array during an activation. In still other embodiments, the source may be configured such that some of the source elements in the array may be activated at slightly different times relative to other source elements in the array. In the latter embodiments, not all of the source elements are activated simultaneously. Other such modifications are also possible. Each such modification will produce a corresponding effect on the near field constructive and destructive interference that occurs between the omnidirectional pressure impulses produced by the individual source elements, and thus will produce corresponding effects on the far field directionality of the source array.

### Example Array Construction and Towing Configurations

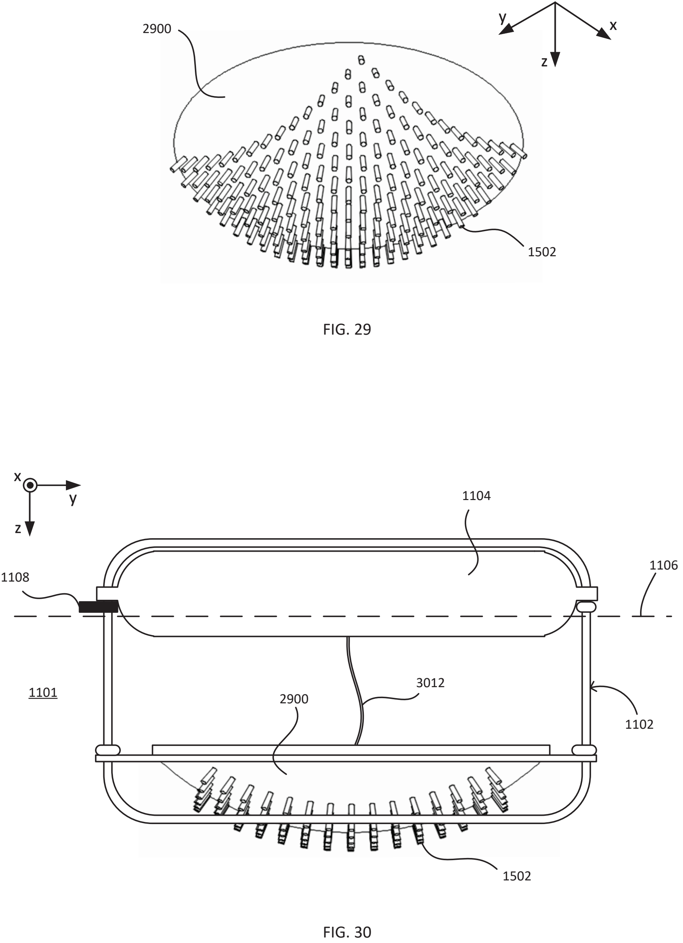

Source arrays according to embodiments may be configured in a variety of ways for towing in a body of water. For example, in some embodiments, the frame to which the sparker source elements are mounted may be designed to have a smooth fluid dynamic profile, such as that exhibited by hemispherical frame 2900 illustrated in FIG. 29. In other embodiments, other frame shapes may be used.

In any embodiments, the frame to which the sparker source elements are attached may itself be fixedly attached to a sled 1102 (see FIG. 30) in a manner similar to that described with reference to FIGS. 11 and 12 above. For example, sled 1102 may include floats 1104 configured to dispose the curved source array in body of water 1101 below water surface 1106, as shown in FIG. 30. If it is desired to tow the source, a vessel may use a tow line attached at tow points 1108 as described above to tow the sled through the body of water. The sparker source elements in the array may be activated via cables in the tow line and via one or more wires 3012 coupled to the sparker source elements, generally as described above. In other embodiments, other configurations may be employed for immersing the source array in a body of water and/or towing and activating the array during a marine seismic survey.

Curved arrays according to any of the embodiments described above may be mounted to towing equipment such as sled 1102 in any orientation. For example, curved arrays may be mounted to a tow sled in a concave upward configuration as shown in FIG. 30, or may be mounted in a concave downward configuration as described above. Other towing orientations and configurations are also possible.

Curved impulsive source arrays according to embodiments may provide a number of benefits in marine seismic surveys that employ them, including in UHR3D surveys. For example, curved sparker source arrays according to embodiments may exhibit an improved spatial response at higher frequencies relative to planar sparker source arrays, as was described above. The improved spatial response of the curved arrays helps to improve the clarity and resolution of images produced using the seismic data recorded during marine surveys that employ them. This is because the curved source arrays enable higher frequency energy reflections to be recorded with an improved signal to noise ratio at a wider range of offsets relative to the range of offsets that are recorded when using planar source arrays.

In addition, because curved source arrays according to embodiments exhibit a more uniform spatial response across its angles of emission compared to that of planar source arrays, the directionality of the energy field emitted by curved arrays may be more stable in poor sea state conditions relative to the directionality of the energy field emitted by planar arrays.

### Example Embodiments

The following is a non-exhaustive numbered list of example embodiments.
1. A marine seismic source, including:
   a plurality of impulsive source elements arranged in a three-dimensional pattern having a width from a left extent to a right extent of the pattern in an x direction, a length from a front extent to a rear extent of the pattern in a y direction, and a depth from an upper extent to a lower extent of the pattern in a z direction, wherein the x, y, and z directions are mutually orthogonal;
   wherein the plural source elements are configured to be towed in a body of water in a manner such that a vertical cross sectional profile of the pattern defines a curve.
2. The marine seismic source of embodiment 1, wherein:
   the vertical cross sectional profile is an inline cross sectional profile.
3. The marine seismic source of embodiment 1, wherein:
   the vertical cross sectional profile is a crossline cross sectional profile.
4. The marine seismic source of any of the preceding embodiments, wherein:
   the source elements are configured to be towed such that the z direction is oriented vertically with the positive z direction pointing downward into the body of water; and
   a centermost point along the curve has a positive z offset relative to outermost points along the curve.
5. The marine seismic source of embodiment 4, wherein:
   the curve is convex, such that the vertical cross sectional profile is concave upward.
6. The marine seismic source of any of embodiments 1 to 3, wherein:
   the source elements are configured to be towed such that the z direction is oriented vertically with the positive z direction pointing downward into the body of water; and
   a centermost point along the curve has a negative z offset relative to outermost points along the curve.
7. The marine seismic source of embodiment 6, wherein:
   the curve is convex, such that the vertical cross sectional profile is concave downward.
8. The marine seismic source of any of the preceding embodiments, wherein:
   the pattern is convex in all inline vertical planes passing therethrough.
9. The marine seismic source of any of the preceding embodiments, wherein:
   the pattern is convex in all crossline vertical planes passing therethrough.
10. The marine seismic source of any of the preceding embodiments, wherein:
   the pattern is convex in all vertical planes passing therethrough.
11. The marine seismic source of any of the preceding embodiments, wherein:
   the curve has a constant radius of curvature.
12. The marine seismic source of any of the preceding embodiments, wherein:
   the curve is elliptical.
13. The marine seismic source of any of the preceding embodiments, wherein:
   the curve is parabolic.
14. The marine seismic source of any of the preceding embodiments, wherein:
   the curve corresponds to a portion of a polyhedron structure.
15. The marine seismic source of embodiment 1, wherein:
   the source elements emit acoustic energy when activated; and
   the curve is configured such that not all of the acoustic energy emitted by source elements disposed along the curve converges at a single point.
16. The marine seismic source of embodiment 15, wherein:
   the curve is compound.
17. The marine seismic source of any of the preceding embodiments, wherein:
   the source elements are fixedly attached to a frame suitable for immersion in the body of water.
18. The marine seismic source of embodiment 17, wherein:
   the frame is substantially acoustically transparent.
19. The marine seismic source of embodiments 17 or 18, wherein:
   the frame comprises a grid of crossing rigid members.
20. The marine seismic source of any of the preceding embodiments, wherein:
   a center to center distance between any two adjacent ones of the source elements is not greater than half of one wavelength of acoustic energy at a highest frequency of interest in a marine seismic survey.
21. The marine seismic source of any of the preceding embodiments, wherein:
   a center to center distance between any two adjacent ones of the source elements is not greater than about 20 cm.
22. The marine seismic source of any of the preceding embodiments, wherein:
   the source elements are configured to be towed such that the z direction is oriented vertically; and
   the length of the pattern is less than or equal to 2 m.
23. The marine seismic source of any of the preceding embodiments, wherein:
   the source elements are configured to be towed such that the z direction is oriented vertically; and
   the width of the pattern is less than or equal to 2 m.
24. The marine seismic source of any of the preceding embodiments, wherein:
   the source elements are configured to be towed such that the z direction is oriented vertically; and
   the width of the pattern and the length of the pattern are both less than or equal to 2 m.
25. The marine seismic source of any of the preceding embodiments, wherein:
   the source elements are configured to be towed such that the z direction is oriented vertically; and
   the width of the pattern and the length of the pattern are both less than or equal to 5 times the wavelength of the highest frequency of interest in a marine seismic survey.
26. The marine seismic source of any of the preceding embodiments, wherein:
   the source elements are configured to be towed such that the z direction is oriented vertically;
   the width of the pattern and the length of the pattern are both less than or equal to 2 m; and
   a center to center distance between any two adjacent ones of the source elements is not greater than about 20 cm.
27. The marine seismic source of any of the preceding embodiments, wherein:
   the source elements comprise marine sparker source elements.
28. The marine seismic source of any of the preceding embodiments, wherein:
   the source elements are configured to be activated simultaneously.
29. The marine seismic source of any of the preceding embodiments, wherein:
   the pattern has a vertical axis;
   the pattern includes at least three source elements; and
   a z offset of the source elements in the pattern increases monotonically or decreases
      monotonically with a lateral distance of the respective source element from the vertical axis.
30. The marine seismic source of embodiment 29, wherein:
   the vertical axis passes through a vertical center of the pattern.
31. The marine seismic source of any of the preceding embodiments, wherein:
   the pattern includes source elements disposed in more than two distinct planes passing through the pattern orthogonally to the z direction of the pattern.
32. A marine seismic source, including:
   a plurality of impulsive source elements arranged in a three-dimensional pattern having a width from a left extent to a right extent of the pattern in an x direction, a length from a front extent to a rear extent of the pattern in a y direction, and a depth from an upper extent to a lower extent of the pattern in a z direction, wherein the x, y, and z directions are mutually orthogonal; wherein the pattern is such that:
   one or more first source elements are disposed on a first horizontal plane having a first z offset;
   one or more second source elements are disposed on a second horizontal plane having a second z offset greater than the first z offset; and
   one or more third source elements are disposed on a third horizontal plane having a third z offset greater than the first z offset and greater than the second z offset;
   wherein a vertical axis passes through one of the first source elements;
   wherein at least one of the second source elements is laterally displaced from the vertical axis by a greater distance than are any of the first source elements; and
   wherein at least one of the third source elements is laterally displaced from the vertical axis by a greater distance than are any of the second source elements.
33. A marine seismic source, including:
   a plurality of impulsive source elements arranged in a three-dimensional pattern having a width from a left extent to a right extent of the pattern in an x direction, a length from a front extent to a rear extent of the pattern in a y direction, and a depth from an upper extent to a lower extent of the pattern in a z direction, wherein the x, y, and z directions are mutually orthogonal;
   wherein the plural source elements are configured to be towed in a body of water such that the x direction corresponds to a crossline direction, the y direction corresponds to an inline direction, and the z direction corresponds to a vertical direction such that the positive z direction points downward into the body of water; and
   wherein the pattern is symmetrical about a vertical axis and defines a convex curve in all vertical cross sectional profiles passing therethrough.
34. The marine seismic source of embodiment 33, wherein:
   the curve is concave upward.
35. The marine seismic source of embodiment 33, wherein:
   the curve is concave downward.
36. The marine seismic source of any of embodiments 33 to 35, wherein:
   the source elements are arranged in rows and columns.
37. The marine seismic source of any of embodiments 33 to 35, wherein:
   the source elements are arranged in concentric circles.
38. The marine seismic source of any of embodiments 33 to 37, wherein:
   the source elements are configured to be activated simultaneously.
39. The marine seismic source of any of embodiments 33 to 38, wherein:
   the source elements comprise marine sparker source elements.
40. The marine seismic source of any of embodiments 33 to 39, wherein:
   the source elements comprise marine sparker source elements that are configured to be activated simultaneously.
41. The marine seismic source of embodiments 39 or 40, wherein:
   the source is configured such that not all of the marine sparker source elements receive the same amount of electric charge during an activation of the source elements.
42. A method of manufacturing a geophysical data product, including:
   towing a plurality of impulsive source elements in a body of water in a manner such that:
      the source elements are arranged in a three-dimensional pattern; and
      a vertical cross sectional profile of the pattern defines a curve;
   causing an activation of the plural source elements;
   receiving, with one or more geophysical sensors, signals responsive to the activation; and
   recording the signals in one or more non-transitory computer readable media, thereby completing the manufacture of the geophysical data product.
43. The method of embodiment 42, wherein:
   the source elements comprise marine sparker source elements.
44. The marine seismic source of any of embodiments 1 or 27 to 31, wherein the pattern is such that:
   one or more first source elements are disposed on a first horizontal plane having a first z offset; and
   one or more second source elements are disposed on a second horizontal plane having a second z offset greater than the first z offset;
   wherein a vertical axis passes through one of the first source elements; and
   wherein at least one of the second source elements is laterally displaced from the vertical axis by a greater distance than are any of the first source elements.
45. The marine seismic source of embodiment 44, further including:
   one or more third source elements disposed on a third horizontal plane having a third z offset greater than the first z offset and greater than the second z offset;
   wherein at least one of the third source elements is laterally displaced from the vertical axis by a greater distance than are any of the second source elements.

Multiple specific embodiments have been described above and in the appended claims. Such embodiments have been provided by way of example and illustration. Persons having skill in the art and having reference to this disclosure will perceive various utilitarian combinations, modifications and generalizations of the features and characteristics of the embodiments so described. For example, steps in methods described herein may generally be performed in any order, and some steps may be omitted, while other steps may be added, except where the context clearly indicates otherwise. Similarly, components in structures described herein may be arranged in different positions or locations, and some components may be omitted, while other components may be added, except where the context clearly indicates otherwise. The scope of the disclosure is intended to include all such combinations, modifications, and generalizations as well as their equivalents.

## Claims

1. A marine seismic source, comprising:
a plurality of impulsive source elements arranged in a three-dimensional pattern having a width from a left extent to a right extent of the pattern in an x direction, a length from a front extent to a rear extent of the pattern in a y direction, and a depth from an upper extent to a lower extent of the pattern in a z direction, wherein the x, y, and z directions are mutually orthogonal;
wherein the plural source elements are configured to be towed in a body of water in a manner such that a vertical cross sectional profile of the pattern defines a curve.

2. The marine seismic source of claim 1, wherein:
the vertical cross sectional profile is an inline cross sectional profile.

3. The marine seismic source of claim 1, wherein:
the vertical cross sectional profile is a crossline cross sectional profile.

4. The marine seismic source of claim 1, wherein:
the source elements are configured to be towed such that the z direction is oriented vertically with the positive z direction pointing downward into the body of water; and
a centermost point along the curve has a positive z offset relative to outermost points along the curve.

5. The marine seismic source of claim 4, wherein:
the curve is convex, such that the vertical cross sectional profile is concave upward.

6. The marine seismic source of any of claim 1, wherein:
the source elements are configured to be towed such that the z direction is oriented vertically with the positive z direction pointing downward into the body of water; and
a centermost point along the curve has a negative z offset relative to outermost points along the curve.

7. The marine seismic source of claim 6, wherein:
the curve is convex, such that the vertical cross sectional profile is concave downward.

8. The marine seismic source of claim 1, wherein:
the pattern is convex in all inline vertical planes passing therethrough.

9. The marine seismic source of claim 1, wherein:
the pattern is convex in all crossline vertical planes passing therethrough.

10. The marine seismic source of claim 1, wherein:
the pattern is convex in all vertical planes passing therethrough.

11. The marine seismic source of claim 1, wherein:
the curve has a constant radius of curvature.

12. The marine seismic source of claim 1, wherein:
the curve is elliptical.

13. The marine seismic source of claim 1, wherein:
the curve is parabolic.

14. The marine seismic source of claim 1, wherein:
the curve corresponds to a portion of a polyhedron structure.

15. The marine seismic source of claim 1, wherein:
the source elements are configured to be towed such that the z direction is oriented vertically; and
the width of the pattern and the length of the pattern are both less than or equal to 2 m.

16. The marine seismic source of claim 1, wherein:
the source elements are configured to be towed such that the z direction is oriented vertically;
the width of the pattern and the length of the pattern are both less than or equal to 2 m; and
a center to center distance between any two adjacent ones of the source elements is not greater than about 20 cm.

17. The marine seismic source of claim 1, wherein:
the source elements comprise marine sparker source elements.

18. The marine seismic source of claim 1, wherein:
the source elements are configured to be activated simultaneously.

19. The marine seismic source of claim 1, wherein:
the pattern has a vertical axis;
the pattern includes at least three source elements; and
a z offset of the source elements in the pattern increases monotonically or decreases monotonically with a lateral distance of the respective source element from the vertical axis.

20. The marine seismic source of claim 19, wherein:
the vertical axis passes through a vertical center of the pattern.

21. The marine seismic source of claim 1, wherein:
the pattern includes source elements disposed in more than two distinct planes passing through the pattern orthogonally to the z direction of the pattern.

22. The marine seismic source of claim 1, wherein the pattern is such that:
one or more first source elements are disposed on a first horizontal plane having a first z offset; and
one or more second source elements are disposed on a second horizontal plane having a second z offset greater than the first z offset;
wherein a vertical axis passes through one of the first source elements; and
wherein at least one of the second source elements is laterally displaced from the vertical axis by a greater distance than are any of the first source elements.

23. The marine seismic source of claim 1, further comprising:
one or more third source elements disposed on a third horizontal plane having a third z offset greater than the first z offset and greater than the second z offset;
wherein at least one of the third source elements is laterally displaced from the vertical axis by a greater distance than are any of the second source elements.

24. A marine seismic source, comprising:
a plurality of impulsive source elements arranged in a three-dimensional pattern having a width from a left extent to a right extent of the pattern in an x direction, a length from a front extent to a rear extent of the pattern in a y direction, and a depth from an upper extent to a lower extent of the pattern in a z direction, wherein the x, y, and z directions are mutually orthogonal;
wherein the plural source elements are configured to be towed in a body of water such that the x direction corresponds to a crossline direction, the y direction corresponds to an inline direction, and the z direction corresponds to a vertical direction such that the positive z direction points downward into the body of water; and
wherein the pattern is symmetrical about a vertical axis and defines a convex curve in all vertical cross sectional profiles passing therethrough.

25. A method of manufacturing a geophysical data product, comprising:
towing a plurality of impulsive source elements in a body of water in a manner such that:
the source elements are arranged in a three-dimensional pattern; and
a vertical cross sectional profile of the pattern defines a curve;
causing an activation of the plural source elements;
receiving, with one or more geophysical sensors, signals responsive to the activation; and
recording the signals in one or more non-transitory computer readable media, thereby completing the manufacture of the geophysical data product.

26. The method of claim 25, wherein:
the source elements comprise marine sparker source elements.
